# EUROPÄISCHE PATENTSCHRIFT

(11) **EP 1 155 526 B1**
(45) Veröffentlichungstag und Bekanntmachung des Hinweises auf die Patenterteilung: **30.11.2005**
(21) Anmeldenummer: 99962259.0
(22) Anmeldetag: 15.12.1999
(51) Int. Cl.: H04K 1/00, H04N 7/167, H04N 7/26

(54) **VORRICHTUNG UND VERFAHREN ZUM ERZEUGEN EINES VERSCHLÜSSELTEN AUDIO- UND/ODER VIDEODATENSTROMS**
DEVICE AND METHOD FOR PRODUCING AN ENCODED AUDIO AND/OR VIDEO DATA STREAM
DISPOSITIF ET PROCEDE POUR GENERER UN FLUX DE DONNEES AUDIO ET/OU VIDEO CRYPTE

(30) Priorität: 24.02.1999 DE 19907964
(43) Veröffentlichungstag der Anmeldung: 21.11.2001
(73) Patentinhaber: Fraunhofer-Gesellschaft zur Förderung der angewandten Forschung e.V., 80686 München (DE)
(72) Erfinder: ALLAMANCHE, Eric, D-90489 Nürnberg (DE); HERRE, Jürgen, D-91054 Buckenhof (DE); KOLLER, Jürgen, D-91054 Erlangen (DE); RUMP, Niels, D-91056 Erlangen (DE)
(74) Vertreter: Schoppe, Fritz
(86) Internationale Anmeldenummer: PCT/EP1999/009978
(87) Internationale Veröffentlichungsnummer: WO 2000/051279

(56) Entgegenhaltungen:
- EP-A- 0 805 592
- EP-A- 0 920 209
- WO-A-98/21852
- US-A- 5 208 857
- US-A- 5 636 279
- QUACKENBUSH ET AL.: "Noiseless Coding of Quantized Spectral Components in MPEG-2 Advanced Audio Coding" 1997 IEEE ASSP WORKSHOP ON APPLICATIONS OF SIGNAL PROCESSING TO AUDIO AND ACOUSTICS, 19. Oktober 1997 (1997-10-19), XP002135840 in der Anmeldung erwähnt

## Beschreibung

Die vorliegende Erfindung bezieht sich auf die Ver- bzw. Entschlüsselung von Audio- und/oder Videosignalen und insbesondere auf ein flexibles Konzept zum kundenselektiven Bereitstellen von Audio- und/oder Videosignalen.

Mit der breiten Verfügbarkeit des Internets in Verbindung mit gehörangepaßten Audiocodierverfahren wurde eine einfache weltweite Verteilung hochwertiger Audiosignale möglich. Dies hat insbesondere weltweit auch zu einer Welle der Musik-Piraterie geführt, bei der Personen beispielsweise gekaufte CD-Musik gemäß dem Standard MPEG Layer-3 (MP3) codieren und illegal auf das World wide Web (WWW) legen. Schätzungen gehen davon aus, daß die Anzahl der so ausgetauschten Musikstücke bei etwa 10 Millionen Downloads pro Tag liegt, ohne daß die Halter der dazu gehörigen Urheber- bzw. Lizenzrechte dies autorisiert haben oder eine entsprechende Abgabe erhalten. Dies hat zu großer Besorgnis in der Musikindustrie geführt.

Insbesondere bestehen heutzutage mehrere Randbedingungen, wenn die Musikverteilungssituation betrachtet wird. Zum einen existiert ein weit verbreitetes Know-How bezüglich der Audiokompressionstechnologie, was sich beispielsweise in dem Standard MPEG Layer-3 (MP3) manifestiert hat. Weiterhin laufen Softwarecodierer, Softwaredecodierer und Abspielgeräte für MP3 (beispielsweise mp3enc, 13enc, WinPlay3) und andere Formate auf einer Vielzahl von Betriebssystemen, einschließlich des Windows-Betriebssystems. Außerdem existieren viele Internetstellen, die MP3-Musik anbieten, die oftmals ohne Autorisierung dort plaziert worden ist.

Neben den Software-Codierern und -Decodierern existieren auch Hardware-Abspielgeräte, wie z. B. MPLayer3, MP-Man, Rio, usw., die in der Lage sind, MP3-Stücke abzuspielen, die entweder von einer CD codiert worden sind, oder die Dateien sind, die von dem Internet heruntergeladen worden sind. Diese Abspielgeräte haben bisher keinerlei implementierte Schutztechniken, um Urheber- oder Lizenzrechten Geltung zu verschaffen. Darüberhinaus existieren Geräte zum Beschreiben von CD-ROMs, die Audio-CDs und MP3-CD-ROMs beschreiben können. Diese Geräte werden mittlerweile zu Preisen angeboten, die zu einer breiten Verfügbarkeit geführt haben. Ferner sind die Preise für hochvolumige Festplatten gefallen, weshalb die allermeisten Internet-Teilnehmer über nahezu unbegrenzte Speichermöglichkeiten verfügen. Schließlich sei noch auf die Tendenz hingewiesen, daß die Übertragungskosten für Dateien immer mehr abnehmen.

Obwohl bei den beschriebenen Hardware-Abspielgeräten noch keine Schutztechniken implementiert sind, existieren dennoch mehrere Techniken zum Schützen von Audio- und/oder Video-Daten (d. h. Multimediadaten, von denen das Multimedia Protection Protocol MMP genannt sei. Diese Technologie stellt eine sogenannte "Secure Envelope"- Technik dar.

Die DE 196 25 625 C1 beschreibt eine solche Technik zur Verschlüsselung und Entschlüsselung von Multimediadaten. Dabei werden nach einem Audio- oder Videostandard codierte Daten zumindest teilweise mittels z. B. eines DES-verschlüsselungsverfahrens (DES = Data Encryption Standard = Datenverschlüsselungsstandard) verschlüsselt und in einen Nutzdatenblock geschrieben. Der Nutzdatenblock wird mit einem Bestimmungsdatenblock versehen, der neben einer Vielzahl weiterer Informationen auch Informationen bezüglich des bei der Verschlüsselung verwendeten Verschlüsselungsalgorithmus sowie eines dazu benötigten Schlüssels umfaßt. Der Schlüssel umfaßt dabei Benutzerinformationen, derart, daß nur ein spezieller Benutzer, der zum Abspielen eines Multimediastücks beispielsweise durch Kauf oder Lizenzierung berechtigt ist, das Stück entschlüsseln kann. Ein Abspielgerät, das nicht den korrekten Schlüssel hat, wird, sobald es auf die verschlüsselten Multimediadaten trifft, den Betrieb einstellen. Damit ist das Ziel erreicht, daß nur der Benutzer, der autorisiert ist, ein Multimediastück abspielen kann. Diese Secure Envelope Technik stellt somit ein zweistufiges Verfahren dar, bei dem ein Multimediastück zunächst codiert wird, um eine erhebliche Datenkompression zu erreichen, und bei dem dann ein kryptographischer Algorithmus eingesetzt wird, um das codierte Multimediastück gegen unerlaubte Angreifer zu verteidigen.

Für Anwendungen, die keinen solchen Maximalschutz erfordern, ist das beschriebene Konzept darin nachteilig, daß es relativ aufwendig werden kann und wesentliche Modifikationen an Abspielgeräten erforderlich macht, um den Bestimmungsdatenblock verarbeiten zu können. Die Abspielgeräte, die letztendlich Massenprodukte im Consumer-Bereich sind, und daher preisgünstig angeboten werden müssen, sollten jedoch wenn möglich überhaupt nicht verändert werden müssen, um auch geschützte Multimediastücke abspielen zu können. Damit bleibt festzustellen, daß das bekannte verschlüsselungskonzept zwar einen maximalen Schutz und eine hohe verschlüsselungsflexibilität durch entsprechendes Gestalten des Anfangsblocks möglich macht, daß jedoch ebenso deutliche Veränderungen an Abspielgeräten erforderlich sind, um verschlüsselte Dateien wieder entschlüsseln bzw. überhaupt einlesen zu können.

Das U.S. Patent Nr. 5,796,838 offenbart ein Verfahren und eine Vorrichtung zum Durchführen einer Inversion eines Frequenzspektrums. Die Inversion des Frequenzspektrum wird erreicht, indem ein unverschlüsseltes Audiosignal analog/digital-gewandelt wird. Das Audiosignal wird dann einer positiven komplexen Frequenzübersetzung unterzogen, so daß die negativen Frequenzkomponenten des Audiosignals um 0 Hz herum positioniert werden. Dann wird das hinsichtlich seiner Frequenz umgesetzte Audiosignal tiefpaßgefiltert, so daß nur die Basisbandkomponenten verbleiben. Das gefilterte komplexe Basisbandsignal wird dann einer beliebigen komplexen Frequenzverschiebung unterzogen, um die Signalfrequenz in einem erwünschten Frequenzband zu positionieren. Das resultierende Signal hat ein gegenüber dem ursprünglichen Audiosignal invertiertes Spektrum. Das abschließende Audiosignal wird erzeugt, indem der Realteil der komplexen Abtastwerte extrahiert wird.

Das U.S.-Patent Nr. 4,534,037 offenbart ein Verfahren und eine Vorrichtung für eine gescrambelte Puls-Code-Modulation-Übertragung oder -Aufzeichnung. Um spezielle Spektralkomponenten einer Sequenz von Digitalsignalen, die in Puls-Code-Wörtern übertragen oder aufgezeichnet werden, hervorzuheben, werden "umgepackte" Wörter gebildet, die eines oder mehrere Bits eines Worts der ursprünglichen Sequenz und eine komplementäre Anzahl von Bits von dem nächsten Wort umfassen. Die Bits eines Worts, aus dem ein "umgepacktes" Wort besteht, werden vor dem Umpacken invertiert, so daß beispielsweise die vierfache Abtastfrequenz, die doppelte Abtastfrequenz oder die Abtastfrequenz selbst in dem Spektrum hervorgehoben werden kann. Ohne Inversion von Wörtern ist es möglich, das Frequenzspektrum hinsichtlich der Frequenz nach unten zu transformieren.

Die Aufgabe der vorliegenden Erfindung besteht darin, ein anderes Konzept zum Ver- bzw. Entschlüsseln von Audio- und/oder Videosignalen zu schaffen.

Diese Aufgabe wird durch eine Vorrichtung zum Erzeugen eines verschlüsselten Datenstroms nach Patentanspruch 1, 17 oder 18 durch eine Vorrichtung zum Erzeugen eines entschlüsselten Datenstroms nach Patentanspruch 19 oder 23, durch ein Verfahren zum Erzeugen eines verschlüsselten Datenstroms nach Patentanspruch 29 und durch ein Verfahren zum Erzeugen eines entschlüsselten Datenstroms nach Patentanspruch 30 gelöst.

Der vorliegenden Erfindung liegt die Erkenntnis zugrunde, daß im Sinne einer flexiblen Ver- bzw. Entschlüsselung vom "Secure Envelope"-Konzept abgegangen werden kann, und daß ein sogenanntes "Soft-Envelope"-Konzept dazu dienen kann, mit sehr begrenzten Änderungen an bereits bestehenden Abspielgeräten auszukommen. Dies hat den Vorteil, daß die Investitionen für Neuentwicklungen, die zu einer ausreichenden Verschlüsselung benötigt werden, gering gehalten werden können. Dies wird erreicht, indem nicht ein Allzweck-Verschlüsselungsverfahren eingesetzt wird, das für jede beliebige Art von Daten anwendbar ist, sondern daß eine Spezialzweck-Verschlüsselung eingesetzt wird, die auf den speziellen Codierer bzw. Decodierer angepaßt ist. Insbesondere bei hochkomprimierenden Codierverfahren, wie z. B. Verfahren nach dem Standard MPEG-1 und MPEG-2 einschließlich MPEG-2 AAC, werden bereits so viel Veränderungen an den zu komprimierenden Daten durchgeführt, daß bereits kleine Veränderungen an codiererinternen Daten und/oder an den Ausgangsdaten des Codierers genügen, um zumindest eine (reversible) Qualitätsverschlechterung des Audio- und/oder Videosignals am Ausgang eines Decodierers, der keine Kenntnis über die im Codierer eingeführten Veränderungen hat, einzuführen, wodurch eine "weiche" Verschlüsselung erreicht ist. Erfindungsgemäß werden nur solche Änderungen durchgeführt, die die Datenstromsyntax des Codierers nicht verändern. Damit kann ein erfindungsgemäß verschlüsselter Datenstrom ohne weiteres von einem Decodierer eingelesen und decodiert werden. Das decodierte Ausgangssignal hat dann bei Nichtkenntnis der Art und Weise der Verschlüsselung, d. h. bei Nichtkenntnis des Schlüssels, eine geringere Qualität.

Ein wesentlicher Vorteil des erfindungsgemäßen Konzepts besteht demnach darin, daß durch die Art und Weise des Eingriffs in die codiererinternen Daten und/oder in die Ausgangsdaten des Codierers eine sehr leichte Verschlüsselung genauso implementiert werden kann, wie eine sehr starke Verschlüsselung, bei der das Ausgangssignal eines nicht-autorisierten Decodierers kaum mehr Ähnlichkeit mit dem ursprünglichen Signal am Eingang des Codierers hat. Ein wesentlicher Vorteil der vorliegenden Erfindung besteht nun jedoch im Gegensatz zu Allzweck-Verschlüsselungsverfahren darin, daß die Vorrichtung zum Erzeugen eines verschlüsselten Datenstroms nicht die durch den Codierer festgelegte Datenstromsyntax verändert. Damit sind keine wesentlichen Modifikationen an einem Decodierer, der, wie es bereits erwähnt wurde, ein Massenartikel ist und preisgünstig und billig sein muß, erforderlich.

Gemäß einem bevorzugten Ausführungsbeispiel der vorliegenden Erfindung wird die Beeinflussung der codiererinternen Daten und/oder der Ausgangsdaten des Codierers durch eine Verschlüsselungseinrichtung lediglich so intensiv ausgeführt, daß ein nicht-autorisierter Decodierer noch Ausgangssignale mit einer gewissen Audio- und/oder videoqualität liefert. Damit kann ein Benutzer eines nicht-autorisierten Decodierers zumindest einen groben Eindruck der verschlüsselten Musik gewinnen, was ihn unter Umständen zum Kauf einer autorisierten Version, d. h. des Schlüssels, bewegt, um die Beeinflussungen der Daten, die in der Vorrichtung zum Erzeugen des verschlüsselten Datenstroms ausgeführt worden sind, wieder in einer Vorrichtung zum Erzeugen eines entschlüsselten Datenstroms rückgängig zu machen, um volle Audio- und/oder Videoqualität zur erlangen.

Ein weiterer wesentlicher Vorteil der vorliegenden Erfindung besteht darin, daß es möglich ist, Audio- und/oder Videosignale so zu verschlüsseln, daß der verschlüsselte Datenstrom exakt die gleiche Länge hat wie der nicht-verschlüsselte lediglich codierte Datenstrom. Wenn ein Codierer so implementiert ist, daß er eine Datenrate liefert, die beispielsweise genau der maximalen Datenrate einer ISDN-Telephonleitung entspricht, so ist eine Echtzeit-Übertragung des codierten nicht-verschlüsselten Datenstroms möglich. Würde ein Verschlüsselungsverfahren einen längeren Datenstrom erzeugen, würde eine Echtzeitübertragung über diese ISDN-Leitung nicht möglich sein.

Die vorliegende Erfindung liefert daher ein Verschlüsselungs- bzw. Entschlüsselungskonzept, bei dem an keiner Stelle die durch den Codierer festgelegte Datenstromsyntax verändert wird. Ein solches Verschlüsselungs- bzw. Entschlüsselungskonzept liefert aus diesem Grund eine maximale Flexibilität, da ein Decodierer einen verschlüsselten Datenstrom immer aufgrund der beibehaltenen Datenstromsyntax decodieren kann. Abhängig von der Datenbeeinflussung in der Entschlüsselungseinrichtung kann nun jedoch eine sehr leichte oder eine sehr starke Verschlüsselung erreicht werden, derart, daß ein nicht-autorisierter Hörer durch seinen Decodierer noch einen relativ guten Eindruck der verschlüsselten Daten oder aber einen sehr schlechten bzw. überhaupt keinen Eindruck mehr von den verschlüsselten Daten erhalten kann. Aufgrund der Tatsache, daß die durch den Codierer vordefinierte Datenstromsyntax durch die Verschlüsselung nicht angetastet wird, sind keine besonders großen Änderungen an bestehenden Abspielgeräten, d. h. Decodierern nötig, um das erfindungsgemäße Konzept implementieren zu können. Diese Eigenschaft ist wesentlich, da ein Multimediadaten-Schutzkonzept, d. h. ein Schutzkonzept für Audio- und/oder Videodaten, nur dann am Markt Akzeptanz finden wird, wenn es ohne wesentliche Kosten implementiert werden kann, und wenn es einfach zu bedienen ist.

Schließlich ist das erfindungsgemäße Konzept werbewirksam, da sämtliche bestehenden Decodierer zum Decodieren verwendet werden können, weshalb Benutzer von bestehenden Decodierern verschlüsselte Stücke - mit verminderter Qualität - anhören können und damit unter Umständen zum Kauf des Schlüssels bzw. zum Kauf/zur Lizensierung auch einer erfindungsgemäßen Vorrichtung zum Erzeugen eines entschlüsselten Datenstroms motiviert werden, um die volle Audio- und/oder videoqualität genießen zu können.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein schematisches Blockdiagramm einer erfindungsgemäßen Vorrichtung zum Erzeugen eines verschlüsselten Datenstroms aus einem Audio- und/oder Videosignal;
- Fig. 2: ein schematisches Blockdiagramm einer erfindungsgemäßen Vorrichtung zum Erzeugen eines Audio- und/oder Videosignals als entschlüsselter Datenstrom;
- Fig. 3: ein Ausführungsbeispiel einer erfindungsgemäßen Vorrichtung zum Erzeugen eines verschlüsselten Datenstroms, die einen Audiocodierer nach dem Standard MPEG Layer-3 oder MPEG-2 AAC aufweist;
- Fig. 4: eine Vorrichtung zum Erzeugen eines verschlüsselten Datenstroms gemäß einem weiteren Ausführungsbeispiel der vorliegenden Erfindung, die einen Audiocodierer nach dem Standard MPEG Layer-3 oder dem Standard MPEG-2 AAC aufweist;
- Fig. 5: eine Vorrichtung zum Erzeugen eines entschlüsselten Audio- und/oder Videosignals gemäß einem weiteren Ausführungsbeispiel der vorliegenden Erfindung, die zu der Vorrichtung zum Erzeugen eines verschlüsselten Datenstroms von Fig. 3 komplementär ist;
- Fig. 6: eine Vorrichtung zum Erzeugen eines entschlüsselten Audio- und/oder Videosignals gemäß einem weiteren Ausführungsbeispiel der vorliegenden Erfindung, die zu der Vorrichtung zum Erzeugen eines verschlüsselten Datenstroms von Fig. 4 komplementär ist;
- Fig. 7: eine Vorrichtung zum Erzeugen eines verschlüsselten Datenstroms gemäß einem weiteren Ausführungsbeispiel der vorliegenden Erfindung, um einen mit einem ersten Schlüssel verschlüsselten Datenstrom in einen mit einem zweiten Schlüssel verschlüsselten Datenstrom umzusetzen;
- Fig. 8: eine Vorrichtung zum Erzeugen eines verschlüsselten Datenstroms gemäß einem weiteren Ausführungsbeispiel der vorliegenden Erfindung, um einen codierten/nicht-verschlüsselten Datenstrom in einen codierten/verschlüsselten Datenstrom umzuwandeln;
- Fig. 9: eine Vorrichtung zum Erzeugen eines entschlüsselten Datenstroms gemäß einem weiteren Ausführungsbeispiel der vorliegenden Erfindung, um einen codierten/verschlüsselten Datenstrom in einen codierten/nicht-verschlüsselten Datenstrom umzuwandeln;
- Fig. 10: ein schematisches Blockschaltbild eines bekannten Audiocodierers z. B. nach dem Standard MPEG Layer-3 oder nach dem Standard MPEG-2 AAC; und
- Fig. 11: ein schematisches Blockschaltbild eines bekannten Audio-Decodierers nach dem Standard MPEG Layer-3 oder nach dem Standard MPEG-2 AAC.

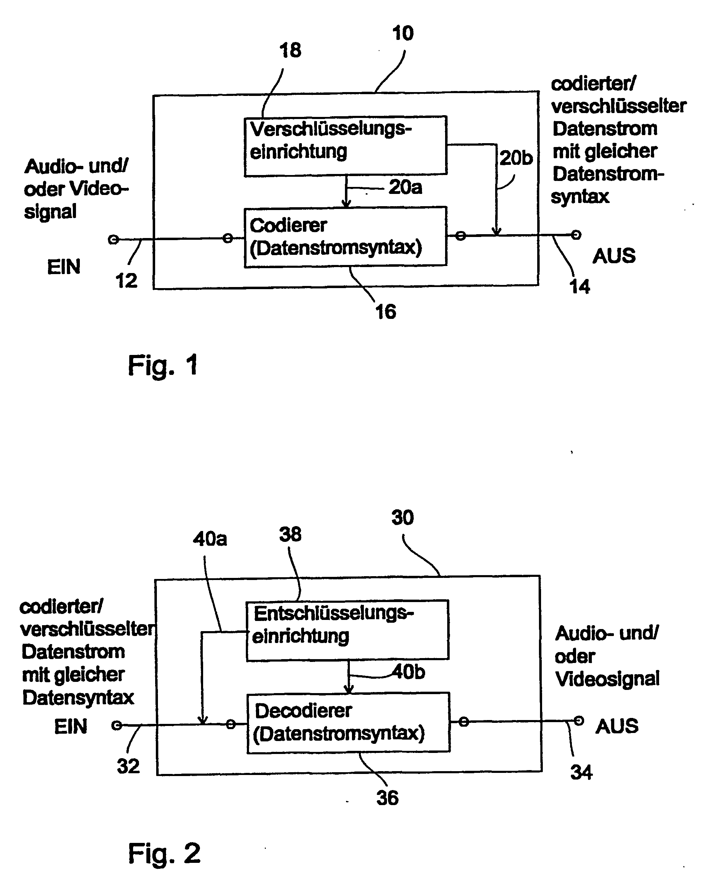

Fig. 1 zeigt ein allgemeines Blockschaltbild einer erfindungsgemäßen Vorrichtung 10 zum Erzeugen eines verschlüsselten Datenstroms, der ein Audio- und/oder Videosignal darstellt. Die Vorrichtung 10 umfaßt einen Eingang 12 und einen Ausgang 14. Zwischen den Eingang 12 und den Ausgang 14 ist ein Codierer 16 geschaltet, der mit einer Verschlüsselungseinrichtung 18 gekoppelt ist, um am Ausgang der Vorrichtung 10 zum Erzeugen eines verschlüsselten Datenstroms einen verschlüsselten Datenstrom zu liefern, der die gleiche Datenstromsyntax aufweist, wie sie der Codierer 16 gewissermaßen festlegt bzw. fordert.

Die Verschlüsselungseinrichtung 18 und der Codierer 16 sind derart gekoppelt, daß die Verschlüsselungseinrichtung 18 codiererinterne Daten (Zweig 20a) und/oder Ausgangsdaten des Codierers (Zweig 20b) beeinflußt, jedoch lediglich derart beeinflußt, daß sich die Datenstromsyntax des Datenstroms am Ausgang 14 der Vorrichtung 10 zum Erzeugen eines verschlüsselten Datenstroms nicht von der durch den Codierer 16 bestimmten Datenstromsyntax unterscheidet. Insbesondere umfaßt die Beeinflussung durch die Verschlüsselungseinrichtung 18 eine Veränderung der codiererinternen Daten 20a und/oder der Ausgangsdaten des Codierers 20b auf eine eindeutig umkehrbare Art und Weise auf der Basis eines Schlüssels, was dazu führt, daß sich der an dem Ausgang 14 erzeugte verschlüsselte Datenstrom bezüglich seiner Nutzinformationen von den Nutzinformationen eines Datenstroms unterscheidet, der durch den Codierer 16 (bzw. durch die Vorrichtung 10) erzeugt werden würde, wenn derselbe keiner Beeinflussung durch die Verschlüsselungseinrichtung 18 unterzogen wäre.

Wie es bereits erwähnt worden ist, ist der Codierer 16 gemäß einem bevorzugten Ausführungsbeispiel der vorliegenden Erfindung als Audiocodierer gemäß dem Standard MPEG Layer-3 oder gemäß dem Standard MPEG-2 AAC ausgeführt. Derselbe könnte jedoch ebenfalls ein Audiocodierer ohne Entropiecodierung, wie z. B. nach dem Standard MPEG Layer-2 sein. Darüberhinaus könnte der Codierer 16 ebenfalls ein Codierer für Sprachsignale sein, der keine Codierung im Frequenzbereich durchführt, sondern eine Codierung im Zeitbereich beispielsweise unter Verwendung von Prädiktions- oder Vektorquantisierungstechniken durchführt. Der Codierer 16 könnte selbstverständlich auch ein videocodierer sein, der videoeingangsdaten komprimiert, um eine Übertragung derselben über Bandbreiten-begrenzte Übertragungskanäle zu ermöglichen.

Der Codierer 16 kann somit ein beliebiger Codierer sein, der Eingangsdaten in denselben gemäß festgelegter Vorschriften in codierte Ausgangsdaten umformt, wobei die Datenstromsyntax der Ausgangsdaten durch den Codierer definiert ist. Üblicherweise existiert zu jedem Codierer ein Decodierer, derart, daß der codierte Datenstrom wieder decodiert werden kann. Dies bedeutet jedoch weiterhin, daß jeder Codierer einen Datenstrom mit einer vordefinierten Datenstromsyntax erzeugt, die schon allein deshalb vordefiniert sein muß, damit ein Decodierer, der zu dem Codierer im wesentlichen komplementär ist, den codierten Datenstrom wieder decodieren kann. Dies ist jedoch nur möglich, wenn der Decodierer die Datenstromsyntax des codierten Datenstroms verstehen bzw. interpretieren kann. Daher kann jedem beliebigen Codierer, zu dem ein Decodierer existiert, eine vordefinierte Datenstromsyntax zugeschrieben werden.

Fig. 2 zeigt ein schematisches Blockschaltbild einer erfindungsgemäßen Vorrichtung 30 zum Erzeugen eines entschlüsselten Datenstroms. Dieselbe umfaßt einen Eingang 32 und einen Ausgang 34. Zwischen dem Eingang 32 und dem Ausgang 34 ist ein Decodierer 36 geschaltet, der für eine vordefinierte Datenstromsyntax ausgerichtet ist, die durch den Codierer 16 (Fig. 1) bestimmt wird, und die erfindungsgemäß durch die Verschlüsselungseinrichtung 18 (Fig. 1) nicht angetastet wird, derart, daß der Datenstrom am Ausgang 14 der Vorrichtung 10 zum Erzeugen eines verschlüsselten Datenstroms die gleiche Datenstromsyntax hat wie der Datenstrom am Eingang 32 der Vorrichtung 30 zum Erzeugen eines entschlüsselten Datenstroms.

Die Vorrichtung 30 zum Erzeugen eines entschlüsselten Datenstroms ist im wesentlichen komplementär zu der Vorrichtung zum Erzeugen eines verschlüsselten Datenstroms 10, derart, daß sie neben dem Decodierer 36 auch eine Entschlüsselungseinrichtung 38 aufweist, die wiederum mit dem Decodierer 36 gekoppelt ist, um Eingangsdaten in den Decodierer 36 (Zweig 40a) bzw. Decodierer-interne Daten (Zweig 40b) auf der Basis des beim Verschlüsseln verwendeten Schlüssels zu beeinflussen, derart, daß die durch die Vorrichtung 10 zum Erzeugen eines verschlüsselten Datenstroms eingeführten Veränderungen, die eindeutig umkehrbare Veränderungen waren, wieder rückgängig gemacht werden, um am Ausgang 34 einen decodierten und unverschlüsselten Datenstrom zu erhalten.

Am Beispiel eines Audiocodierers sei das erfindungsgemäße Konzept anhand der Fig. 1 und 2 veranschaulicht. Am Eingang 12 der Vorrichtung 10 zum Erzeugen eines verschlüsselten Datenstroms würde in diesem Fall ein zeitdiskretes Audiosignal anliegen, das durch den Codierer 16 codiert wird, und das am Ausgang 14 der Vorrichtung zum Erzeugen eines verschlüsselten Datenstroms als Bitstrom ausgegeben wird, der dieselbe Bitstromsyntax hat, wie sie für den Codierer 16 vordefiniert ist, der jedoch aufgrund der Verschlüsselungseinrichtung 18 und insbesondere aufgrund der Beeinflussung der Daten über die Zweige 20a und 20b verschlüsselt worden ist. Der verschlüsselte codierte Bitstrom wird in den Eingang 32 der Vorrichtung 30 zum Erzeugen eines entschlüsselten Datenstroms eingegeben, und durch den Audio-Decodierer 36 wieder decodiert, um am Ausgang 34 wieder das zeitdiskrete Audiosignal zu erhalten. Ist die Vorrichtung 30 zum Erzeugen eines entschlüsselten Datenstroms autorisiert, d. h. kennt sie den von der Verschlüsselungseinrichtung 18 verwendeten Schlüssel, so wird sie die Verschlüsselungen über die Zweige 40a bis 40c wieder rückgängig machen, derart, daß das zeitdiskrete Audiosignal am Ausgang 34 der Vorrichtung 30 zum Erzeugen eines entschlüsselten Datenstroms ein Audiosignal mit voller Audioqualität ist. Ist die Vorrichtung 30 dagegen nicht autorisiert, d. h. kennt sie nicht den verwendeten Schlüssel, so wird das zeitdiskrete Audiosignal am Ausgang 34 ein Audiosignal sein, das sich je nach Anwendung mehr oder weniger von dem Audiosignal am Eingang 12 der Vorrichtung 10 unterscheiden wird. Ist die Datenbeeinflussung durch die Verschlüsselungseinrichtung nur begrenzt gewesen, so wird das zeitdiskrete Audiosignal am Ausgang 34 der Vorrichtung 30 zum Erzeugen eines entschlüsselten Datenstroms dem nicht-autorisierten Benutzer noch einen gewissen Höreindruck liefern, der ihn vielleicht dazu motiviert, sich autorisieren zu lassen, d. h. den Schlüssel, den die verschlüsselungseinrichtung 18 angewendet hat, zu kaufen, um in den vollen Genuß zu kommen.

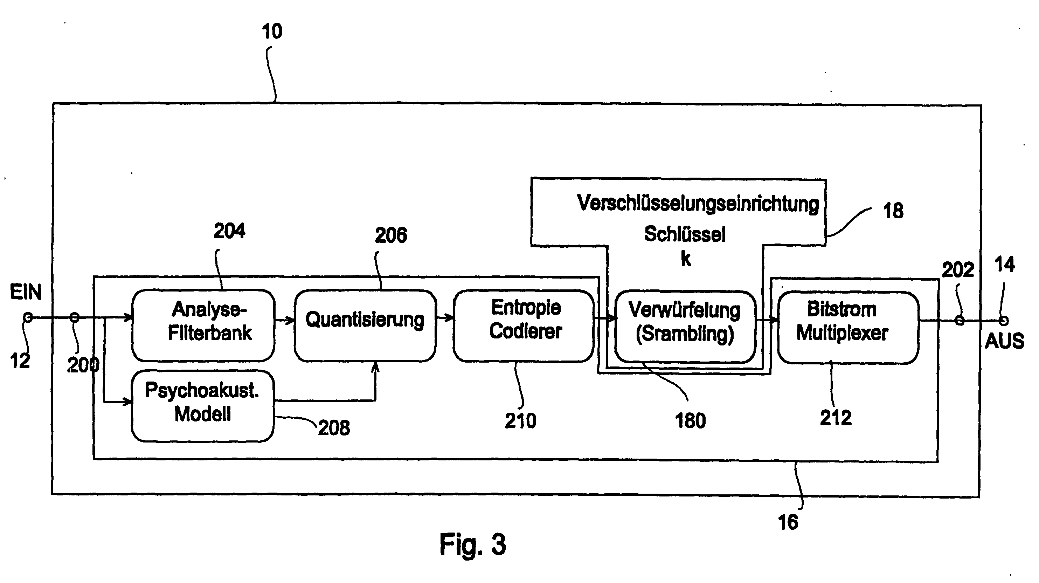

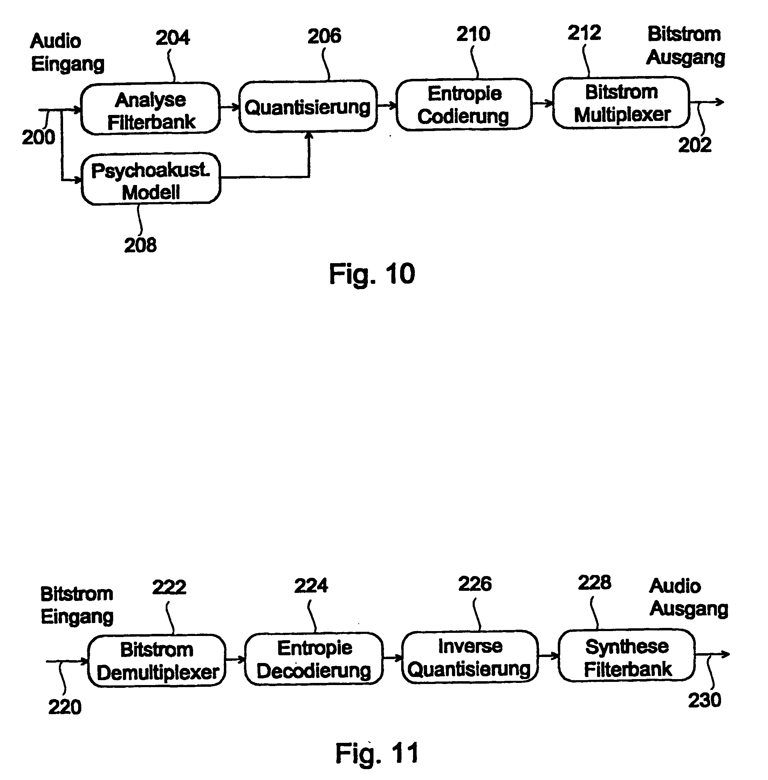

Bevor anhand der Fig. 3 bis 9 auf mehrere bevorzugte Ausführungsbeispiele der vorliegenden Erfindung eingegangen wird, werden zunächst anhand von Fig. 10 ein bekanntes Codiererkonzept und anhand von Fig. 11 ein bekanntes Decodiererkonzept beschrieben.

Fig. 10 stellt ein Blockschaltbild für einen bekannten Audiocodierer dar, der beispielsweise nach dem Standard ISO/IEC 13818-7 (MPEG-2 AAC) ausgeführt ist. Derselbe umfaßt einen Audioeingang 200 und einen Bitstromausgang 202. Ein zeitdiskretes Audiosignal am Audioeingang 200 wird in eine Analyse-Filterbank 204 eingespeist, um in den Frequenzbereich abgebildet zu werden, derart, daß sich am Ausgang der Analyse-Filterbank ein Satz von Spektralwerten ergibt, die das Kurzzeitspektrum des Audiosignals am Eingang 200 darstellen, d. h. ein Block von zeitdiskreten Audiosignal-Abtastwerten wird durch die Analyse-Filterbank 204 in einen Block von Spektralwerten, d. h. in eine spektrale Darstellung, umgesetzt. Diese Spektralwerte werden in einem mit Quantisierung bezeichneten Block 206 unter Berücksichtigung eines psychoakustischen Modells 208 quantisiert, derart, daß eine möglichst bitsparende Quantisierung erreicht wird, daß jedoch das eingeführte Quantisierungsrauschen unter der Maskierungsschwelle des Audiosignals am Eingang 200 liegt, so daß es unhörbar bleibt.

Es handelt sich somit um eine verlustbehaftete Quantisierung (allgemeiner gesagt verlustbehaftete Codierung), die jedoch zu keinen störenden Höreinflüssen führt. Die quantisierten Spektralwerte 206 werden, um eine weitere Datenkompression zu erreichen, in einem Block 210 einer Entropie-Codierung unterzogen. Die Entropie-codierten quantisierten Spektralwerte werden schließlich einem Bitstrom-Multiplexer 212 zugeführt, der gemäß der vordefinierten Codierersyntax den Entropie-codierten quantisierten Spektralwerten die entsprechenden Seiteninformationen hinzufügt, derart, daß an dem Bitstromausgang 202 ein codierter Bitstrom ausgegeben wird, der als Nutzinformationen Hauptinformationen in Form der Entropie-codierten quantisierten Spektralwerte und Nebeninformationen in Form von Seiteninformationen, wie z. B. Skalenfaktoren, usw., aufweist. Bezüglich näherer Details zu den einzelnen Codiererblöcken, die in Fig. 10 gezeigt sind, bzw. zu weiteren dort nicht gezeigten Blöcken, wie z. B. Blöcken zur Verarbeitung von Stereosignalen, etc., sei auf den Standard ISO/IEC 13818-7 (MPEG-2 AAC) verwiesen. Dieser Standard umfaßt ferner eine detaillierte Darstellung der im Block 210 ausgeführten Entropie-Codierung. Es sei darauf hingewiesen, daß das erfindungsgemäße Konzept ebenfalls auf einen Codierer ohne Entropie-Codierung (MPEG Layer-1 und Layer-2), und allgemein auf jeglichen Codierer angewendet werden kann, der einen codierten Datenstrom mit einer vordefinierten Datenstromsyntax erzeugt. Für die vorliegende Erfindung ist es insbesondere nicht relevant, wie die Umsetzung der zeitlichen Daten in die spektralen Daten bewirkt wird, dieselbe ist daher auf auf die sogenannten Subbandcodierer (z. B. MPEG-1) anwendbar.

Fig. 11 zeigt einen zu Fig. 10 komplementären Decodierer, der ebenfalls nach dem AAC-Standard ausgeführt sein kann. Derselbe umfaßt einen Bitstromeingang 220, der mit einem Bitstrom-Demultiplexer 222 gekoppelt ist, der eine zum Bitstrom-Multiplexer 212 (Fig. 10) komplementäre Demultiplex-Operation durchführt, um unter anderem Entropie-codierte quantisierte Spektralwerte in eine Entropie-Decodierungseinrichtung 224 einzuspeisen, die die im Block 210 (Fig. 10) eingeführte Entropie-Codierung wieder rückgängig macht. Die nun nur noch quantisierten Spektralwerte werden in einem Block 226 einer inversen Quantisierung unterzogen, die komplementär zu der im Block 206 durchgeführten Operation ist. Die nun wieder requantisierten Spektralwerte werden in einer Synthese-Filterbank 228 wieder von der spektralen Darstellung in die zeitliche Darstellung umgesetzt, um an einem Audioausgang 230 ein zeitdiskretes Audiosignal zu erhalten.

Bezugnehmend auf Fig. 1 wurde davon gesprochen, daß die erfindungsgemäße Vorrichtung zum Erzeugen eines verschlüsselten Datenstroms, wie sie in Fig. 1 schematisch dargestellt ist, über den Zweig 20a codiererinterne Daten beeinflussen kann und/oder über den Zweig 20b Ausgangsdaten des Codierers 16 beeinflussen kann. Dies sei anhand des bekannten Codierers, der in Fig. 10 beispielhaft dargestellt ist, erläutert. Eingangsdaten für den Codierer sind zeitdiskrete Audiosignale.

Der in Fig. 1 gezeigte Zweig 20a bezieht sich auf codiererinterne Daten. Aus Fig. 10 ist ersichtlich, daß Codierer aus einer Vielzahl von aufeinanderfolgenden Blöcken zusammengesetzt werden können, wobei prinzipiell jegliche Ein- bzw. Ausgangsdaten eines Blocks auf eindeutig umkehrbare Art und Weise beeinflußt werden können, um eine Verschlüsselung zu erreichen, ohne die Bitstromsyntax zu verändern. Genauso könnten Steuerdaten, wie z. B. Steuerdaten für die Analyse-Filterbank 204, für die Quantisierung 206, für die Entropie-Codierung 210, etc. beeinflußt werden. Codiererinterne Daten sind daher nicht nur die eigentlichen Nutzdaten, d. h. die mehr oder weniger verarbeiteten Spektralwerte, sondern auch die Steuerdaten, die üblicherweise als Seiteninformationen in dem codierten Bitstrom auftreten. Schließlich können auch Ausgangsdaten des Codierers, d. h. am Ausgang des Bitstrom-Multiplexers 212, beeinflußt werden, ohne die Bitstromsyntax zu ändern. Im einfachsten Fall könnten beispielsweise Entropie-codierte Wörter umsortiert, d. h. verwürfelt oder gescrambelt, werden. Selbstverständlich könnten die Codewörter auch bereits direkt vor dem Bitstrom-Multiplexer auf der Basis eines Schlüssels auf eindeutig umkehrbare Art und Weise verwürfelt werden, woraus deutlich wird, daß es im Prinzip unerheblich ist, ob Eingangsdaten des Codierers von Fig. 10, codiererinterne Daten oder Ausgangsdaten des Codierers durch die Verschlüsselungseinrichtung 18 (Fig. 1) beeinflußt werden.

An dieser Stelle sei darauf hingewiesen, daß eine Verwürfelung einzelner Bits von Entropie-Codewörtern zu einer Zerstörung der Datenstromsyntax führen kann, da beispielsweise Huffman-Codewörter eine unterschiedliche Länge haben und ein Entropie-Decodierer, der mit bitweise verwürfelten Codewörtern konfrontiert wird, sehr wahrscheinlich nicht mehr korrekt arbeiten kann, da er nicht in der Lage ist, den korrekten Anfang bzw. das korrekte Ende eines Codeworts zu finden, weil die Datenstromsyntax innerhalb der Codewörter gestört ist.

Im nachfolgenden wird auf Fig. 3 Bezug genommen, um ein bevorzugtes Ausführungsbeispiel der vorliegenden Erfindung für die Vorrichtung 10 zum Erzeugen eines verschlüsselten Datenstroms zu erläutern. In Fig. 3 sowie in den folgenden Figuren haben gleiche Elemente gleiche Bezugszeichen. Insbesondere haben die bezüglich Fig. 10 und Fig. 11 beschriebenen Blöcke die gleichen Bezugszeichen.

Fig. 3 zeigt ein bevorzugtes Ausführungsbeispiel, bei dem die Verschlüsselungseinrichtung 18 lediglich codiererinterne Daten, d. h. Entropie-codierte quantisierte Spektralwerte beeinflußt. Sie vollführt dies unter Verwendung einer Verwürfelungs- oder "Scrambling"-Einheit, derart, daß Entropie-codierte quantisierte Spektralwerte, die durch Codewörter dargestellt werden, in Abhängigkeit von einem Schlüssel k z. B. umpositioniert, d. h. umsortiert, werden. So könnten beispielsweise immer zwei benachbarte Codewörter vertauscht werden. Dies würde im decodierten Audiosignal zu deutlichen Qualitätseinbußen führen, jedoch nicht dazu, daß ein Benutzer überhaupt keinen Eindruck von dem Audiosignal mehr bekommen würde. Die Verwürfelungseinheit 180 könnte jedoch genausogut auch auf die Seiteninformationen, wie z. B. Skalenfaktoren, in Abhängigkeit des Benutzerschlüssels k eingreifen. Werden, wie bei dem in Fig. 3 gezeigten Ausführungsbeispiel, Entropie-codierte quantisierte Spektralwerte lediglich umsortiert, so tritt keine Veränderung der Länge des verschlüsselten Datenstroms am Ausgang 14 der Verschlüsselungsvorrichtung 10 auf, derart, daß der codierte verschlüsselte Datenstrom in denselben Übertragungskanal wie der unverschlüsselte decodierte Datenstrom paßt.

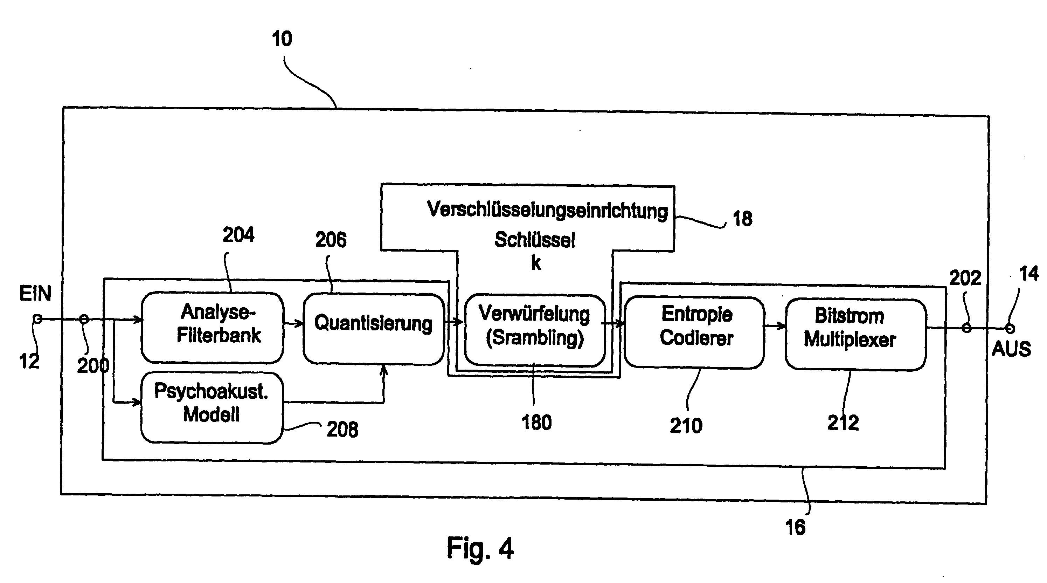

In Fig. 4 ist ein weiteres bevorzugtes Ausführungsbeispiel gezeigt, bei dem die Verwürfelungseinheit 180 zwischen den Entropie-Codierer 210 und den Quantisierer 206 geschaltet ist. Hier werden quantisierte Spektralwerte, die noch nicht Entropie-codiert worden sind, im einfachsten Fall verwürfelt. Dies bedeutet, daß im Gegensatz zu Fig. 3 nun die verwürfelten quantisierten Spektralwerte Entropie-codiert werden.

Lediglich beispielhaft wird im nachfolgenden eine an sich bekannte Scrambling- bzw. Verwürfelungsfunktion beschrieben, die als sogenannter Keimerzeugungsalgorithmus ("Seed-Generating"-Algorithmus) ausgeführt ist. Hierbei wird ein Zufallszahlengenerator verwendet, der abhängig von einem bestimmten Startwert, d. h. dem Keim, eine zufallszahlenfolge ermittelt. Wesentlich daran ist, daß der zufallszahlengenerator immer wieder die gleiche Zufallszahlenfolge liefern wird, wenn er denselben Startwert erhält, daß er jedoch eine andere zufallszahlenfolge ergeben wird, wenn er einen anderen Startwert erhält. Der Startwert würde in diesem Beispiel der Schlüssel k sein. Die quantisierten Spektralwerte (in Fig. 4) können nun mit der Pseudo-Zufallsbitfolge bitweise mittels z. B. einer XOR-Funktion verknüpft werden. Damit werden bestimmte Bits der quantisierten Spektralwerte verändert, was eine Verschlüsselung darstellt, die nur durch eine Vorrichtung zum Erzeugen eines entschlüsselten Datenstroms wieder rückgängig gemacht werden kann, die denselben Schlüssel, d. h. denselben Startwert, für ihren zufallszahlengenerator aufweist, der wieder eine XOR-Verknüpfung der quantisierten Spektralwerte mit den verwürfelten quantisierten Spektralwerten durchführt, wie später detaillierter ausgeführt wird. Es sei darauf hingewiesen, daß die XOR-Verknüpfung nur ein Beispiel für eine eindeutig umkehrbare Veränderung ist. Die XOR-Funktion hat den Vorteil, daß eine doppelte Anwendung der gleichen Funktion wieder zum Ausgangspunkt führt, derart, daß nur eine einzige Funktion und nicht eine erste Funktion und eine zweite Umkehrfunktion implementiert werden müssen. Prinzipiell ist aber jede umkehrbare Funktion zur Verknüpfng geeignet.

Wenn durch die Verschlüsselungseinrichtung nicht sämtliche Bits eines quantisierten Spektralwerts beeinflußt werden, sondern lediglich die niederwertigen Bits, so wird die Verschlüsselung "weicher" sein, derart, daß der verschlüsselte Audiostrom nur auf begrenzte Art und Weise beeinflußt worden ist und noch eine relativ gute hörbare Qualität haben wird. Somit ist ersichtlich, daß gemäß der vorliegenden Erfindung die Intensität der Verschlüsselung nahezu beliebig eingestellt werden kann. Wird eine sehr massive Verschlüsselung erwünscht, so ist es möglich, die Skalenfaktoren direkt zu beeinflussen. Bei bestimmten Codierverfahren tragen dieselben jedoch die wesentlichen Intensitätsinformationen, weshalb eine Beeinflussung der Skalenfaktoren zu ganz erheblichen Beeinträchtigungen der Audioqualität führen kann.

Im vorhergehenden wurde bereits eine einfache Funktionsweise der Verschlüsselungseinrichtung 18 mit der Verwürfelungseinrichtung 180 beschrieben. Wird eine Beeinflussung der quantisierten Spektralwerte bereits vor der Entropie-Codierung durchgeführt, so wird dies sehr wahrscheinlich zu einer veränderten Länge des Bitstroms am Ausgang 14 der Vorrichtung 10 führen, da die bitweise veränderten quantisierten Spektralwerte sehr wahrscheinlich andere Codewörter mit unterschiedlicher Länge nach sich ziehen werden als die unverwürfelten Spektralwerte, die von dem Codierer 16 erzeugt werden würden, wenn keine Verschlüsselungseinrichtung 18 vorhanden sein würde. Werden dagegen, wie es in Fig. 3 gezeigt ist, die Codewörter nach der Entropie-Codierung 210 nur umsortiert, so wird dies nicht zu einer größeren Länge des Bitstroms am Ausgang 14 führen.

Es existieren jedoch noch viele weiteren Möglichkeiten, um codiererinterne Daten zu beeinflussen. Bei Audiocodierern gemäß dem eingangs beschriebenen AAC-Standard wird eine Entropie-Codierung durchgeführt, die dort als "Noiseless Coding" bezeichnet wird. Dieselbe wird verwendet, um die Redundanz der Skalenfaktoren und des quantisierten Spektrums jedes Audiokanals weiter zu reduzieren. Als Entropie-Codierverfahren wird ein Huffman-Codierverfahren eingesetzt. Insbesondere werden für bestimmte Abschnitte oder Sections, die aus mehreren Skalenfaktorbändern bestehen können, jeweilige Codetabellen (Codebooks) verwendet. Insbesondere existieren 11 verschiedene normierte Codetabellen, die durch eine Codetabellennummer jeweils eindeutig identifiziert werden. Der Entropiecodierer 210 ordnet somit jedem Abschnitt, der mit ein und derselben Codetabelle Entropie-codiert wird, die entsprechende Codetabellennummer zu. Die Verwürfelungseinrichtung 180 könnte nun bereits die Codetabellennummer verändern. Diese Veränderung ist jedoch lediglich in begrenztem Rahmen möglich, um eine umkehrbare Veränderung im Rahmen der Bitstromsyntax zu erreichen. So existieren Codetabellen, die vorzeichenbehaftete oder vorzeichenlose n-Tupel von quantisierten Spektralwerten darstellen können. Außerdem existieren Codetabellen, die vierdimensional sind, oder die zweidimensional sind. Dies bedeutet, daß ein Codewort vier quantisierte Spektralwerte im Falle einer vierdimensionalen Codetabelle, oder zwei quantisierte Spektralwerte im Falle einer zweidimensionalen Codetabelle darstellt.

Manche Codetabellen stellen eine vorzeichenbehaftete Entropie-Codierung von Spektralwerten dar, während wieder andere Codetabellen eine vorzeichenlose Codierung von Spektralwerten darstellen. Wenn die Codetabellen vorzeichenlos codieren, wird dem Codewort unmittelbar ein vorzeichenbit für jeden Spektralwert im Bitstrom hinterhergestellt, wenn der entsprechende Spektralswert ungleich Null ist. Ein Decodierer kann dann aufgrund des Huffman-Codeworts und des folgenden Vorzeichenbits den quantisierten Spektralwert wieder decodieren. Die Verschlüsselungseinrichtung 18 ist bei einem bevorzugten Ausführungsbeispiel der vorliegenden Erfindung angepaßt, um eine Vorzeichenänderung der quantisierten Spektralwerte, die mit vorzeichenlosen Codetabellen codiert werden, durchzuführen. Die Vorzeichenänderung geschieht durch Verändern des beschrieben Vorzeichens, wobei diese Veränderung entweder nach einem bestimmten Muster oder unter Verwendung einer XOR-Verknüpfung einer Pseudo-Zufallsbitfolge mit den Vorzeichendaten durchgeführt werden könnte. Damit wird immer die gleiche Länge des resultierenden Bitstroms erreicht, wenn nur die quantisierten Spektralwerte beeinflußt werden, die mit vorzeichenlosen Codetabellen Entropie-codiert werden.

Wie es bereits erwähnt wurde, wird beim AAC-Standard ein Abschnitt ("Section"), d. h. ein bestimmtes Frequenzband des Kurzzeitspektrums des Audiosignals, das zumindest ein Skalenfaktorband aufweist, mit ein und derselben Codetabelle Entropie-codiert. Wenn die Verwürfelungseinrichtung 180 derart gestaltet ist, daß sie lediglich eine Umsortierung der quantisierten Spektralwerte in ihrem Frequenzraster ohne eine Veränderung der quantisierten Spektralwerte selbst durchführt, so kann eine gleiche Länge des ausgangsseitigen Bitstroms am Ausgang 14 der Vorrichtung 10 zum Erzeugen eines verschlüsselten Datenstroms erreicht werden, wenn nur innerhalb von Spektralbereichen umsortiert wird, in denen die Codierung der quantisierten Spektralwerte mit der gleichen Art der Entropiecodierung, z. B. dem gleichen Huffman-Codebook, vorgenommen wird.

Eine gleiche Länge des verschlüsselten codieren Datenstroms wird ferner erreicht, wenn im Falle der Verwendung von mehrdimensionalen Codetabellen statt einzelnen quantisierten Spektralwerten n-Tupel von Spektralwerten gemeinsam umsortiert werden.

Damit wird ein codierter verschlüsselter Datenstrom am Ausgang 14 der Vorrichtung 10 zum Erzeugen eines verschlüsselten Datenstroms erzeugt, der die gleiche Datenstromsyntax hat, wie sie für bzw. durch den Codierer 16 vorbestimmt ist, und der darüberhinaus bei besonders bevorzugten Ausführungsbeispielen der vorliegenden Erfindung die gleiche Länge wie ein unverschlüsselter codierter Datenstrom aufweist.

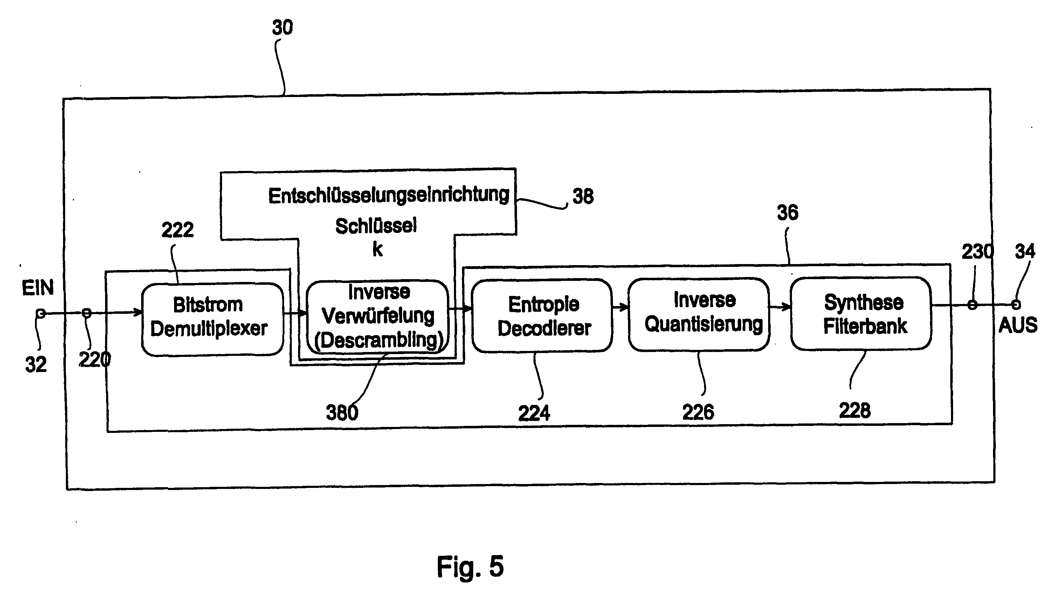

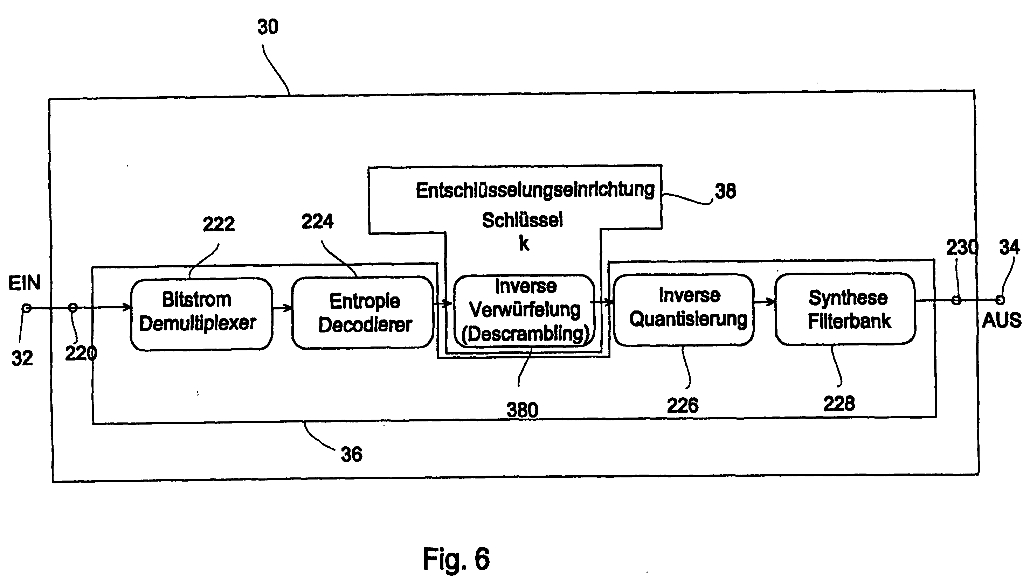

In den Fig. 5 und 6 sind entsprechende Vorrichtungen 30 zum Erzeugen eines entschlüsselten Audio- und/oder Videosignals dargestellt. So ist die Vorrichtung 30, die in Fig. 5 skizziert ist, komplementär zu der Vorrichtung zum Erzeugen eines entschlüsselten Datenstroms in Fig. 3. Analog ist die in Fig. 6 dargestellte Vorrichtung 30 zum Erzeugen eines entschlüsselten Audio- und/oder Videosignals zu der in Fig. 4 dargestellten Vorrichtung 10 zum Erzeugen eines verschlüsselten Datenstroms komplementär. Die Entschlüsselungseinrichtung 38 in den Fig. 5 und 6 enthält eine Einheit 380 zum Durchführen einer inversen Verwürfelung (Descrambling), um die durch die Verwürfelungseinrichtung 180 (Fig. 3, Fig. 4) eingeführten Beeinflussungen der codiererinternen Daten, d. h. der Entropie-codierten quantisierten Spektralwerte bzw. der quantisierten Spektralwerte, die noch nicht Entropie-codiert worden sind, wieder rückgängig zu machen.

Grundsätzlich kann gesagt werden, daß die Funktion der Einrichtung 380 zur inversen Verwürfelung immer komplementär zu der dazugehörigen Einrichtung 180 zum Verwürfeln ist. Eine Verwendung eines Keimerzeugungsalgorithmus, d. h. einer Schlüssel-gesteuerten Pseudo-Zufallsbitfolge, erlaubt es, daß die Einrichtung 180 und die entsprechende Einrichtung 380 exakt gleich aufgebaut werden können und der Schlüssel zum Verschlüsseln dem Schlüssel zum Entschlüsseln exakt entspricht. Andere Lösungen, bei denen die verschlüsselungseinrichtung 180 und die Entschlüsselungseinrichtung 380 unterschiedlich aufgebaut sind, und bei denen die Schlüssel zum Verschlüsseln und zum Entschlüsseln nicht identisch sind, sondern in einem bestimmten Zusammenhang zueinander stehen, können jedoch ebenfalls eingesetzt werden, solange die Verschlüsselungseinrichtung eindeutig umkehrbare Veränderungen an den entsprechenden Daten auf der Basis des Schlüssels durchführt und die Vorrichtung zum Erzeugen eines entschlüsselten Audio- und/oder Videosignals die eingeführten Änderungen auf der Basis des Schlüssels wieder rückgängig machen kann.

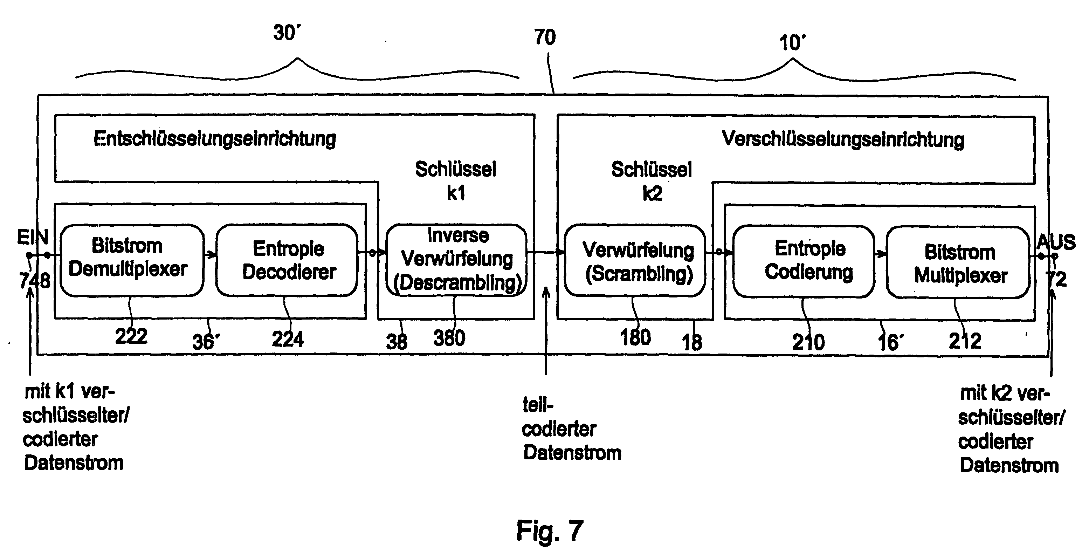

Während bezüglich der Fig. 3 und 4 bevorzugte Ausführungsbeispiele der vorliegenden Erfindung zum Erzeugen eines verschlüsselten Datenstroms am Ausgang 14 beschrieben worden sind, die aus einem zeitdiskreten Audiosignal am Eingang 12 den verschlüsselten Datenstrom am Ausgang 14 erzeugen, wird nun anhand von Fig. 7 eine erfindungsgemäße Vorrichtung zum Erzeugen eines verschlüsselten Datenstroms gemäß einem weiteren Ausführungsbeispiel der vorliegenden Erfindung beschrieben, die den verschlüsselten Datenstrom an ihrem Ausgang erzeugt, jedoch nicht aus einem zeitdiskreten Eingangssignal sondern aus einem andersartig verschlüsselten (codierten) Datenstrom.

Die in Fig. 7 gezeigte Vorrichtung 70 zum Erzeugen des verschlüsselten Datenstroms erzeugt an ihrem Ausgang 72 einen mit einem Schlüssel k₂ verschlüsselten, codierten Datenstrom, während sie an ihrem Eingang 74 einen mit einem zu k₂ unterschiedlichen Schlüssel k₁ verschlüsselten, codierten Datenstrom empfängt. Die Vorrichtung 70 erzeugt nun nicht mehr aus einem zeitdiskreten Audio-Eingangssignal einen verschlüsselten Datenstrom, sondern allgemein aus einem mit einem ersten Schlüssel verschlüsselten Datenstrom einen mit einem anderen Schlüssel verschlüsselten Datenstrom. Die Vorrichtung 70 umfaßt abweichend von Fig. 1 eine verschlüsselungseinrichtung 18 und einen Teil-Codierer 16'. Die Vorrichtung 70 umfaßt ferner eine Entschlüsselungseinrichtung 38 und einen Teil-Decodierer 36'. Im Gegensatz zu den in den Fig. 3 und 4 beschriebenen Ausführungsbeispielen besteht der Teil-Decodierer 36' nur noch aus einem Bitstrom-Demultiplexer 222 und einem Entropie-Decodierer 224, während der Teil-Codierer 16' nun lediglich noch aus einem Entropie-Codierer 210 und einem Bitstrom-Multiplexer 212 besteht. Die in Fig. 7 gezeigte Verschlüsselungseinrichtung 18 beeinflußte die Eingangsdaten des Teil-Codierers 16', während analog dazu die Entschlüsselungseinrichtung 38 von Fig. 7 die Ausgangsdaten des Teil-Decodierers 36 beeinflußt. Die Ausgangsdaten aus dem Teil-Decodierer sind in der bisherigen Terminologie die decodiererinternen Daten, d. h. die Daten, die bei der Erzeugung des in die Einrichtung 70 eingespeisten verschlüsselten Datenstroms ursprünglich beeinflußt worden sind. Die Eingangsdaten in den Teil-Codierer der Vorrichtung 70 sind analog dazu die codiererinternen Daten des Codieres, der den verschlüsselten, codierten Datenstrom am Eingang ursprünglich erzeugt hat.

Im nachfolgenden wird auf die Funktionsweise der Vorrichtung 70 zum Erzeugen eines verschlüsselten Datenstroms, wie sie in Fig. 7 gezeigt ist, eingegangen. Am Eingang 74 erhält die Vorrichtung 70 einen mit einem Schlüssel k₁ verschlüsselten codierten Datenstrom, der bei der hier gezeigten Ausführungsform derart verschlüsselt worden ist, daß die quantisierten Spektralwerte vor ihrer Entropie-Codierung verwürfelt worden sind, oder, allgemeiner gesagt, auf irgendeine Art und Weise auf der Basis des Schlüssels k₁ auf umkehrbare Art und weise beeinflußt worden sind. Am Ausgang des Entropie-Decodierers 224 liegen dann die noch verschlüsselten jedoch Entropie-decodierten quantisierten Spektralwerte vor, die durch die Entschlüsselungseinrichtung 38 auf der Basis des Schlüssel k₁ unter Verwendung der Einrichtung 380 zum Durchführen einer inversen Verwürfelung wieder entschlüsselt werden, derart, daß zwischen dem Teil 30' und dem Teil 10' ein decodierter Datenstrom vorliegt, der nun jedoch nicht ein zeitdiskretes Audio- und/oder Videosignal oder etwas ähnliches ist, sondern der bei dem in Fig. 7 gezeigten Ausführungsbeispiel quantisierte Spektralwerte, d. h. codiererinterne bzw. decodiererinterne Daten umfaßt. Die quantisierten Spektralwerte werden in die Verschlüsselungseinrichtung 18 und insbesondere in die Verwürfelungseinrichtung 180 eingespeist, derart, daß dieselben auf der Basis eines von dem Schlüssel k₁ unterschiedlichen Schlüssels k₂ verwürfelt oder allgemeiner gesagt beeinflußt werden, um dann in dem Teil-Codierer 16' Entropie-codiert zu werden, damit sich an dem Ausgang 72 schließlich ein mit dem Schlüssel k₂ verschlüsselter codierter Datenstrom ergibt. Aus Fig. 7 ist ersichtlich, daß es sich hier um einen sogenannten "Scrambling-Transcoder" handelt, d. h. um einen Bitstromkonvertierer, welcher einen mit einem Schlüssel k₁ verschlüsselten Bitstrom direkt in einen Bitstrom mit dem Schlüssel k₂ umsetzt. Derselbe umfaßt nicht mehr einen vollständigen Audio-Decodierer oder Audio-Codierer, sondern lediglich noch bestimmte Teile derselben, die im Sinne dieser Erfindung als Teil-Decodierer bzw. Teil-Codierer bezeichnet werden.

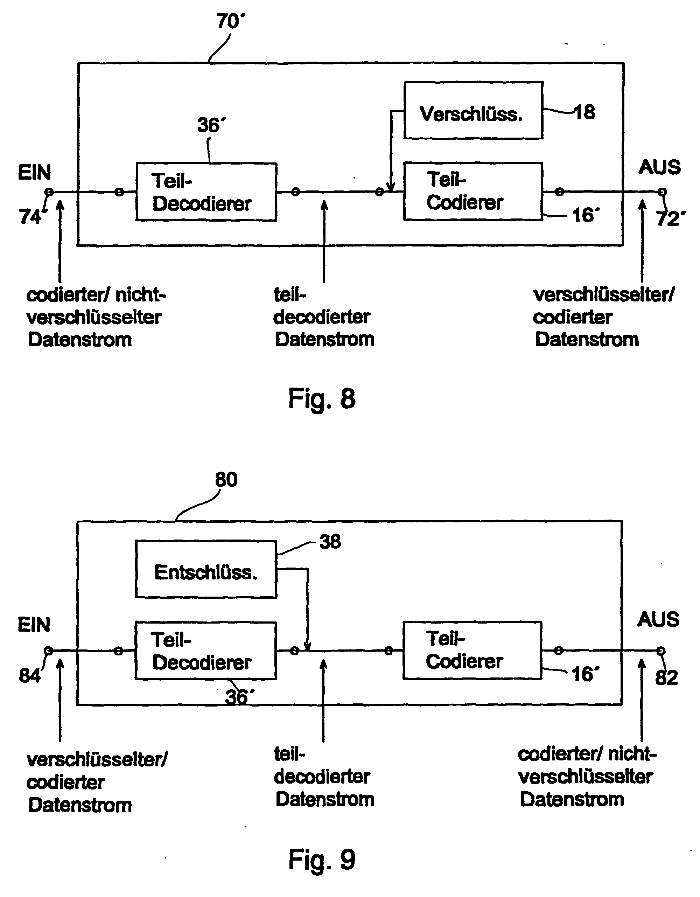

Fig. 8 zeigt eine allgemeine Darstellung einer Vorrichtung 70' zum Erzeugen eines verschlüsselten codierten Datenstroms, die sich nur darin von der in Fig. 7 gezeigten Vorrichtung unterscheidet, daß der Bitstrom am Eingang 74' ein codierter nicht-verschlüsselter Datenstrom ist, der durch den Teil-Decodierer 36' decodiert wird und dann durch den Teil-Codierer 16' in Verbindung mit der Verschlüsselungseinrichtung 18 codiert und verschlüsselt wird, derart, daß sich an dem Ausgang 72' ein verschlüsselter/codierter Datenstrom ergibt. Die in Fig. 8 gezeigte Vorrichtung 70' könnte beispielsweise dazu verwendet werden, einen Standard-Bitstrom mit der vordefinierten Datenstromsyntax direkt in einen mit einem bestimmten Schlüssel verschlüsselten Datenstrom umzusetzen, wobei beide Datenströme die vordefinierte Datenstromsyntax aufweisen.

Fig. 9 zeigt ein weiteres Ausführungsbeispiel einer erfindungsgemäßen Vorrichtung 80 zum Erzeugen eines entschlüsselten Datenstroms mit einem Ausgang 82 und einem Eingang 84. Am Eingang 84 wird ein codierter/verschlüsselter Datenstrom eingespeist, der unter Verwendung der Einrichtung 38, die mit dem Teil-Decodierer 36 gekoppelt ist, entschlüsselt wird, derart, daß sich ein decodierter entschlüsselter Datenstrom ergibt, der wiederum in einen nachgeschalteten Teil-Codierer 16 eingespeist wird, derart, daß sich ein codierter/nicht-verschlüsselter Datenstrom ergibt. Die in Fig. 9 dargestellte Vorrichtung 80 zum Erzeugen eines verschlüsselten Datenstroms ist somit ein Bit- bzw. Datenstromkonvertierer, welcher einer mit einem Schlüssel k₁ verschlüsselten Bitstrom direkt in einen Standard-Bitstrom, d. h. in einen Bitstrom, der nicht-verschlüsselt ist und die vordefinierte Datenstromsyntax aufweist, umsetzt.

Abweichend von den beschriebenen Ausführungsbeispielen für die Vorrichtungen 70, 70' und 80 können sämtliche in dieser Anmeldung beschriebenen Beeinflussungen von codiererinternen Daten auf sämtliche beschriebenen Arten und Weisen durchgeführt werden. Im Hinblick auf das vorhergehende ist es offensichtlich, daß die Teil-Codierer bzw. Teil-Decodierer an die entsprechende Beeinflussung angepaßt werden können. Wurde z. B. eine Umsortierung von Huffman-Codewörtern durchgeführt, so könnte ein Teil-Decodierer lediglich einen Bitstrom-Demultiplexer enthalten, während der Teil-Codierer dann lediglich einen Bitstrom-Multiplexer umfaßt.

## Patentansprüche

1. Vorrichtung (10) zum Erzeugen eines verschlüsselten Datenstroms aus einem Audiosignal, mit folgenden Merkmalen:
einem Codierer (16) zum Codieren des Audiosignals, um als Ausgangssignal einen Datenstrom mit einer vordefinierten Datenstromsyntax zu erzeugen;
einer Verschlüsselungseinrichtung (18), die mit dem Codierer (16) gekoppelt ist, zum Beeinflussen von codiererinternen Daten (20a) auf eine eindeutig umkehrbare Art und Weise auf der Basis eines Schlüssels (k1), derart, daß der erzeugte verschlüsselte Datenstrom Nutzinformationen aufweist, die sich von Nutzinformationen eines Datenstroms unterscheiden, der durch die Vorrichtung (10) ohne Vorhandensein der Verschlüsselungseinrichtung (18) erzeugt werden würde, und daß der erzeugte verschlüsselte Datenstrom die vordefinierte Datenstromsyntax aufweist,
wobei der Codierer ein Codierer für Audiosignale ist, der folgende Merkmale aufweist:
eine Analysefilterbank (204) zum Umsetzen des Audiosignals von dem Zeitbereich in eine spektrale Darstellung, um Spektralwerte zu erhalten;
eine Quantisierungseinrichtung (206) zum Quantisieren der Spektralwerte unter Berücksichtigung eines psychoakustischen Modells (208); und
einen Entropie-Codierer (210), der angeordnet ist, um eine Entropie-Codierung der quantisierten Spektralwerte mittels einer Mehrzahl von vordefinierten Codetabellen durchzuführen, wobei jede Codetabelle für die Entropiecodierung von quantisierten Spektralwerten in einem Frequenzband vorgesehen ist, und wobei zumindest ein Frequenzband zwei oder mehrere quantisierte Spektralwerte aufweist, und
wobei die Verschlüsselungseinrichtung (18) angeordnet ist, um basierend auf dem Schlüssel die zwei oder mehr quantisierten Spektralwerte in dem Frequenzband, das zwei oder mehr quantisierte Spektralwerte aufweist, und dem eine Codetabelle zugeordnet ist, umzusortieren.

2. Vorrichtung nach Anspruch 1, bei der die Verschlüsselungseinrichtung (18) ferner angeordnet ist, um auf der Basis des Schlüssels die zwei oder mehr quantisierten Spektralwerte so umzusortieren, daß der verschlüsselte Datenstrom die gleiche Länge in Bit hat wie ein Datenstrom, der durch die Vorrichtung (10) ohne Vorhandensein der Verschlüsselungseinrichtung erzeugt werden würde.

3. Vorrichtung nach einem der vorhergehenden Ansprüche, bei der die Verschlüsselungseinrichtung (18) angeordnet ist, um auf der Basis des Schlüssels die zwei oder mehr quantisierten Spektralwerte lediglich so umzusortieren, daß sich die Nutzinformationen des verschlüsselten Datenstroms nur so stark von den Nutzinformationen eines Datenstroms unterscheiden, der ohne Vorhandensein der Verschlüsselungseinrichtung (18) erzeugt werden würde, daß ein Decodierer, der nicht im Besitz des Schlüssels ist, aufgrund der verschlüsselten Daten ein decodiertes Ausgangssignal mit einer Qualität liefert, die geringer als die Qualität ist, die der Decodierer liefern würde, wenn er im Besitz des Schlüssels wäre, wobei jedoch eine Mindestqualität sichergestellt ist.

4. Vorrichtung nach einem der Ansprüche 1 bis 3, bei der die Quantisierungseinrichtung (206) angeordnet ist, um die quantisierten Spektralwerte als Hauptinformationen und Skalenfaktoren, von denen jeder mindestens einem quantisierten Spektralwert zugeordnet ist, als Seiteninformationen zu erzeugen; und
wobei die Verschlüsselungseinrichtung (18) ferner angeordnet ist, um die durch die Quantisierungseinrichtung (206) erzeugten Skalenfaktoren auf der Basis des Schlüssels zu beeinflussen.

5. Vorrichtung nach Anspruch 1, bei der die Verschlüsselungseinrichtung angeordnet ist, um die quantisierten Spektralwerte in dem Frequenzband, das zwei oder mehrere Spektralwerte aufweist, mit einer Pseudo-Zufallsbitfolge, die aufgrund des Schlüssels als Startwert erzeugt wird, mittels einer EXKLUSIV-ODER-Verknüpfung zu verknüpfen.

6. Vorrichtung nach Anspruch 1, bei der ferner lediglich niederwertige Bits von Spektralwerten mit einer Pseudo-Zufallsbitfolge verknüpft werden.

7. Vorrichtung nach Anspruch 1, bei der die quantisierten Spektralwerte vorzeichenbehaftet sind, und bei der die Verschlüsselungseinrichtung (18) ferner angeordnet ist, um auf der Basis des Schlüssels Vorzeichen von quantisierten Spektralwerten zu verändern.

8. Vorrichtung nach Anspruch 1, bei der der Entropie-Codierer (210) derart angeordnet ist, daß er zumindest eine Codetabelle aufweist, die eine vorzeichenlose Codetabelle ist, derart, daß ein Vorzeichen für ein Codewort aus der Codetabelle getrennt von dem Codewort in die Nutzinformationen geschrieben wird, wobei die Verschlüsselungseinrichtung (18) ferner angeordnet ist, um vor der Entropie-Codierung der quantisierten Spektralwerte das Vorzeichen zumindest eines quantisierten Spektralwerts basierend auf dem Schlüssel zu verändern.

9. Vorrichtung nach Anspruch 1, bei der zumindest eine Codetabelle der Mehrzahl von Codetabellen eine mehrdimensionale Codetabelle ist, bei der ein Codewort eine Mehrzahl von quantisierten Spektralwerten darstellt, wobei die Verschlüsselungseinrichtung (18) angeordnet ist, um Gruppen von quantisierten Spektralwerten umzusortieren, wobei eine Gruppe von Spektralwerten so viele quantisierte Spektralwerte aufweist, wie sie durch ein Codewort der mehrdimensionalen Codetabelle codiert werden.

10. Vorrichtung nach einem der vorhergehenden Ansprüche, bei der der Codierer eine Mehrzahl von Unterblöcken (204 bis 210) aufweist, die mit einem Bitstrommultiplexer (212) verbunden sind, der von den einzelnen Unterblöcken ausgegebene Daten gemäß der vordefinierten Datenstromsyntax multiplext, um die Ausgangsdaten des Codierers (16) zu erhalten.

11. Vorrichtung (70) zum Erzeugen eines auf der Basis eines zweiten Schlüssels (k2) verschlüsselten zweiten Datenstroms aus einem auf der Basis eines ersten Schlüssels (k1) verschlüsselten ersten Datenstroms, wobei der erste Datenstrom ein unter Verwendung eines Codierers codiertes Audiosignal mit einer vordefinierten Datenstromsyntax ist, wobei der erste Datenstrom derart verschlüsselt ist, daß zwei oder mehr quantisierten Spektralwerte in einem Frequenzband, das zwei oder mehr quantisierte Spektralwerte aufweist, und dem eine Codetabelle zugeordnet ist, auf der Basis des ersten Schlüssels umsortiert worden sind, wobei nach der Umsortierung eine Entropie-Codierung der quantisierten Spektralwerte mittels einer Mehrzahl von vordefinierten Codetabellen durchgeführt wurde, wobei jede Codetabelle für die Entropiecodierung von quantisierten Spektralwerten in einem Frequenzband vorgesehen ist, und wobei zumindest ein Frequenzband die zwei oder mehreren quantisierte Spektralwerte aufweist, mit folgenden Merkmalen:
einem Teil-Decodierer (36') zum Rückgängigmachen eines Teils der Codierung, derart, daß die umsortierten zwei oder mehreren Spektralwerte vorliegen;
einer Entschlüsselungseinrichtung (38) zum Entschlüsseln der umsortierten zwei oder mehreren Spektralwerte durch Rückgängigmachen der Umsortierung auf der Basis des ersten Schlüssels (k1);
einer Verschlüsselungseinrichtung (18) zum Beeinflussen der Reihenfolge der zwei oder mehreren Spektralwerte des Frequenzbands, dem eine Codetabelle zugeordnet ist, auf der Basis des zweiten Schlüssels (k2);
einem Teil-Codierer (16') zum Durchführen des Teils der Codierung, der durch den Teil-Decodierer (36') rückgängig gemacht worden ist, um den auf der Basis des zweiten Schlüssels (k2) verschlüsselten Datenstrom zu erzeugen, wobei der zweite Datenstrom die vordefinierte Datenstromsyntax aufweist.

12. Vorrichtung (70') zum Erzeugen eines auf der Basis eines Schlüssels (k1) verschlüsselten zweiten Datenstroms aus einem ersten Datenstrom, wobei der erste Datenstrom ein unter Verwendung eines Codierers codiertes Audiosignal mit einer vordefinierten Datenstromsyntax ist, mit folgenden Merkmalen:
einem Teil-Decodierer (36') zum Rückgängigmachen eines Teils der Codierung, derart, daß quantisierte Spektralwerte des Audiosignals vorliegen;
einer Verschlüsselungseinrichtung (18) zum Umsortieren von zwei oder mehr quantisierten Spektralwerten in einem Frequenzband, das zwei oder mehr quantisierte Spektralwerte aufweist, auf der Basis des ersten Schlüssels (k1), wobei dem Frequenzband eine einer Mehrzahl von vordefinierten Codetabellen für eine Entropie-Codierung zugeordnet ist, wobei jede Codetabelle für die Entropiecodierung von quantisierten Spektralwerten in einem Frequenzband vorgesehen ist, und wobei zumindest ein Frequenzband die zwei oder mehreren quantisierte Spektralwerte aufweist, wobei die Verschlüsselungseinrichtung angeordnet ist, um die quantisierten Spektralwerte eines Frequenzbands umzusortieren, denen dieselbe Codetabelle zugeordnet ist;
einem Teil-Codierer (16') zum Durchführen des Teils der Codierung, der durch den Teil-Decodierer (36') rückgängig gemacht worden ist, um den auf der Basis des Schlüssels (k1) verschlüsselten Datenstrom zu erzeugen, wobei der zweite Datenstrom die vordefinierte Datenstromsyntax aufweist.

13. Vorrichtung (80) zum Erzeugen eines entschlüsselten Datenstroms aus einem auf der Basis eines Schlüssels (k1) verschlüsselten ersten Datenstroms, wobei der erste Datenstrom ein unter Verwendung eines Codierers codiertes Audiosignal mit einer vordefinierten Datenstromsyntax ist, wobei der erste Datenstrom derart verschlüsselt ist, daß zumindest zwei oder mehr quantisierte Spektralwerte in einem Frequenzband auf der Basis des ersten Schlüssels (k1) umsortiert worden sind, wobei dem Frequenzband, dessen quantisierte Spektralwerte umsortiert worden sind, eine einer Mehrzahl von vordefinierten Codetabellen für eine Entropie-Codierung zugeordnet ist, wobei jede Codetabelle für die Entropiecodierung von quantisierten Spektralwerten in einem Frequenzband vorgesehen ist, und wobei zumindest ein Frequenzband die zwei oder mehreren quantisierte Spektralwerte aufweist, mit folgenden Merkmalen:
einem Teil-Decodierer (36') zum Rückgängigmachen eines Teils der Codierung, derart, daß die umsortierten zwei oder mehreren quantisierten Spektralwerte vorliegen, wobei die umsortierten zwei oder mehreren quantisierten Spektralwerte zu einem Frequenzband gehören, dem eine Codetabelle zugeordnet ist;
einer Entschlüsselungseinrichtung (38) zum Entschlüsseln der umsortierten zwei oder mehreren quantisierten Spektralwerte durch Rückgängigmachen der Umsortierung auf der Basis des Schlüssels (k1);
einem Teil-Codierer (16') zum Durchführen des Teils der Codierung, der durch den Teil-Decodierer (36') rückgängig gemacht worden ist, um den zweiten Datenstrom mit der vordefinierten Datenstromsyntax zu erzeugen.

14. Vorrichtung nach einem der Ansprüche 11 bis 13,
bei der der Teil-Decodierer (36') einen Bitstrom-Demultiplexer (222) aufweist, wobei die codiererinternen Daten die Ausgangsdaten aus dem Bitstrom-Demultiplexer (222) sind.

15. Vorrichtung nach Anspruch 14,
bei der der Teil-Decodierer (36') fernen einen dem Bitstrom-Demultiplexer (222) nachgeschalteten Entropie-Decodierer (224) aufweist, wobei die codiererinternen Daten die Ausgangsdaten aus dem Entropie-Decodierer (224) sind.

16. Vorrichtung nach einem der Ansprüche 11 bis 13, bei der neben den zwei oder mehreren quantisierten Spektralwerten auch Skalenfaktoren beeinflußt werden.

17. Vorrichtung (30) zum Erzeugen eines entschlüsselten Audiosignals aus einem verschlüsselten Datenstrom, der ein auf eindeutig umkehrbare Art und Weise innerhalb eines Frequenzbandes umsortierte quantisierte und anschließend Entropie-codierte Spektralwerte eines Audiosignals aufweist, wobei das Frequenzband dadurch definiert ist, daß ihm eine Codetabelle aus einer Mehrzahl von Codetabellen für die Entropie-Codierung zugeordnet ist, wobei der verschlüsselte Datenstrom Nutzinformationen aufweist, die sich von Nutzinformationen eines unverschlüsselten Datenstroms unterscheiden, und wobei der verschlüsselte Datenstrom dieselbe Datenstromsyntax wie ein unverschlüsselter Datenstrom aufweist, mit folgenden Merkmalen:
einem Decodierer (36) zum Decodieren von Eingangsdaten, um decodierte Ausgangsdaten zu erzeugen, wobei der Decodierer einen Entropie-Decodierer (24) zum Rückgängigmachen der Entropie-Codierung aufweist, um die umsortierten quantisierten Spektralwerte zu erhalten; und
einer Entschlüsselungseinrichtung (38)' zum Beeinflussen der umsortierten quantisierten Spektralwerte auf der Basis eines Schlüssels, um die eindeutig umkehrbare Umsortierung, die in einer Vorrichtung zum Erzeugen eines verschlüsselten Datenstroms durchgeführt worden ist, rückgängig zu machen, um das entschlüsselte Audiosignal zu erhalten.

18. Vorrichtung (30) nach Anspruch 17, bei der der Decodierer ferner folgende Merkmale aufweist:
eine Mehrzahl von Funktionsblöcken, die mit einem Bitstrom-Demultiplexer (222) gekoppelt sind, der Teile des Datenstroms gemäß der vordefinierten Datenstromsyntax zu den einzelnen Blöcken leitet.

19. Vorrichtung (30) nach einem der Ansprüche 18 oder 19, bei der der Decodierer (36) ferner folgendes Merkmal aufweist:
eine Synthesefilterbank (228), um eine spektrale Darstellung des Audiosignals in eine zeitliche Darstellung umzusetzen.

20. Verfahren (10) zum Erzeugen eines verschlüsselten Datenstroms aus einem Audiosignal, mit folgenden Schritten:
Codieren (16) des Audiosignals, um als Ausgangssignal einen Datenstrom mit einer vordefinierten Datenstromsyntax zu erzeugen;
Verschlüsseln von codiererinternen Daten (20a) durch Beeinflussen (18) derselben auf eine eindeutig umkehrbare Art und Weise auf der Basis eines Schlüssels (k1), derart, daß der erzeugte verschlüsselte Datenstrom Nutzinformationen aufweist, die sich von Nutzinformationen eines Datenstroms unterscheiden, der ohne den Schritt des Verschlüsselns erzeugt werden würde, und daß der erzeugte verschlüsselte Datenstrom die vordefinierte Datenstromsyntax aufweist,
wobei im Schritt des Codierens ein Audiosignal codiert wird, mit folgenden Schritten:
Umsetzen (204) des Audiosignals von dem Zeitbereich in eine spektrale Darstellung, um Spektralwerte zu erhalten;
Quantisieren (206) der Spektralwerte unter Berücksichtigung eines psychoakustischen Modells (208); und
Entropie-Codieren (210) der quantisierten Spektralwerte mittels einer Mehrzahl von vordefinierten Codetabellen durchzuführen, wobei jede Codetabelle für die Entropiecodierung von quantisierten Spektralwerten in einem Frequenzband vorgesehen ist, und wobei zumindest ein Frequenzband zwei oder mehrere quantisierte Spektralwerte aufweist, und
wobei der Schritt des verschlüsselns (18) ausgeführt wird, um basierend auf dem Schlüssel die zwei oder mehr quantisierten Spektralwerte in dem Frequenzband, das zwei oder mehr quantisierte Spektralwerte aufweist, und dem eine Codetabelle zugeordnet ist, umzusortieren.

21. Verfahren (70) zum Erzeugen eines auf der Basis eines zweiten Schlüssels (k2) verschlüsselten zweiten Datenstroms aus einem auf der Basis eines ersten Schlüssels (k1) verschlüsselten ersten Datenstroms, wobei der erste Datenstrom ein unter Verwendung eines Codierers codiertes Audiosignal mit einer vordefinierten Datenstromsyntax ist, wobei der erste Datenstrom derart verschlüsselt ist, daß zwei oder mehr quantisierten Spektralwerte in einem Frequenzband, das zwei oder mehr quantisierte Spektralwerte aufweist, und dem eine Codetabelle zugeordnet ist, auf der Basis des ersten Schlüssels umsortiert worden sind, wobei nach der Umsortierung eine Entropie-Codierung der quantisierten Spektralwerte mittels einer Mehrzahl von vordefinierten Codetabellen durchgeführt wurde, wobei jede Codetabelle für die Entropiecodierung von quantisierten Spektralwerten in einem Frequenzband vorgesehen ist, und wobei zumindest ein Frequenzband die zwei oder mehreren quantisierte Spektralwerte aufweist, mit folgenden Schritten:
Rückgängigmachen (36') eines Teils der Codierung, derart, daß die umsortierten zwei oder mehreren Spektralwerte vorliegen;
Entschlüsseln (38) der umsortierten zwei oder mehreren Spektralwerte durch Rückgängigmachen der Umsortierung auf der Basis des ersten Schlüssels (k1);
Verschlüsseln (18) durch Beeinflussen der Reihenfolge der zwei oder mehreren Spektralwerte des Frequenzbands, dem eine Codetabelle zugeordnet ist, auf der Basis des zweiten Schlüssels (k2);
Durchführen (16') des Teils der Codierung, der durch den Schritt des Rückgängigmachens (36') rückgängig gemacht worden ist, um den auf der Basis des zweiten Schlüssels (k2) verschlüsselten Datenstrom zu erzeugen, wobei der zweite Datenstrom die vordefinierte Datenstromsyntax aufweist.

22. Verfahren (70') zum Erzeugen eines auf der Basis eines Schlüssels (k1) verschlüsselten zweiten Datenstroms aus einem ersten Datenstrom, wobei der erste Datenstrom ein unter Verwendung eines Codierers codiertes Audiosignal mit einer vordefinierten Datenstromsyntax ist, mit folgenden Schritten:
Rückgängigmachen (36') eines Teils der Codierung, derart, daß quantisierte Spektralwerte des Audiosignals vorliegen;
Verschlüsseln (18) durch Umsortieren von zwei oder mehr quantisierten Spektralwerten in einem Frequenzband, das zwei oder mehr quantisierte Spektralwerte aufweist, auf der Basis des ersten Schlüssels (k1), wobei dem Frequenzband eine einer Mehrzahl von vordefinierten Codetabellen für eine Entropie-Codierung zugeordnet ist, wobei jede Codetabelle für die Entropiecodierung von quantisierten Spektralwerten in einem Frequenzband vorgesehen ist, und wobei zumindest ein Frequenzband die zwei oder mehreren quantisierte Spektralwerte aufweist, wobei die Verschlüsselungseinrichtung angeordnet ist, um die quantisierten Spektralwerte eines Frequenzbands umzusortieren, denen dieselbe Codetabelle zugeordnet ist;
Durchführen (16') des Teils der Codierung, der durch den Teil-Decodierer (36') rückgängig gemacht worden ist, um den auf der Basis des Schlüssels (k1) verschlüsselten Datenstrom zu erzeugen, wobei der zweite Datenstrom die vordefinierte Datenstromsyntax aufweist.

23. Verfahren (80) zum Erzeugen eines entschlüsselten Datenstroms aus einem auf der Basis eines Schlüssels (k1) verschlüsselten ersten Datenstroms, wobei der erste Datenstrom ein unter Verwendung eines Codierers codiertes Audiosignal mit einer vordefinierten Datenstromsyntax ist, wobei der erste Datenstrom derart verschlüsselt ist, daß zumindest zwei oder mehr quantisierte Spektralwerte in einem Frequenzband auf der Basis des ersten Schlüssels (k1) umsortiert worden sind, wobei dem Frequenzband, dessen quantisierte Spektralwerte umsortiert worden sind, eine einer Mehrzahl von vordefinierten Codetabellen für eine Entropie-Codierung zugeordnet ist, wobei jede Codetabelle für die Entropiecodierung von quantisierten Spektralwerten in einem Frequenzband vorgesehen ist, und wobei zumindest ein Frequenzband die zwei oder mehreren quantisierte Spektralwerte aufweist, mit folgenden Schritten:
Rückgängigmachen (36') eines Teils der Codierung, derart, daß die umsortierten zwei oder mehreren quantisierten Spektralwerte vorliegen, wobei die umsortierten zwei oder mehreren quantisierten Spektralwerte zu einem Frequenzband gehören, dem eine Codetabelle zugeordnet ist;
Entschlüsseln (38) der umsortierten zwei oder mehreren quantisierten Spektralwerte durch Rückgängigmachen der Umsortierung auf der Basis des Schlüssels' (k1);
Durchführen (16') des Teils der Codierung, der durch den Schritt des Rückgängigmachens (36') rückgängig gemacht worden ist, um den zweiten Datenstrom mit der vordefinierten Datenstromsyntax zu erzeugen.

24. Verfahren (30) zum Erzeugen eines entschlüsselten Audiosignals aus einem verschlüsselten Datenstrom, der ein auf eindeutig umkehrbare Art und Weise innerhalb eines Frequenzbandes umsortierte quantisierte und anschließend Entropie-codierte Spektralwerte eines Audiosignals aufweist, wobei das Frequenzband dadurch definiert ist, daß ihm eine Codetabelle aus einer Mehrzahl von Codetabellen für die Entropie-Codierung zugeordnet ist, wobei der verschlüsselte Datenstrom Nutzinformationen aufweist, die sich von Nutzinformationen eines unverschlüsselten Datenstroms unterscheiden, und wobei der verschlüsselte Datenstrom dieselbe Datenstromsyntax wie ein unverschlüsselter Datenstrom aufweist, mit folgenden Schritten:
Decodieren (36) von Eingangsdaten, um decodierte Ausgangsdaten zu erzeugen, wobei im Schritt des Decodierens ein Entropie-Decodieren (24) zum Rückgängigmachen der Entropie-Codierung durchgeführt wird, um die umsortierten quantisierten Spektralwerte zu erhalten; und
Entschlüsseln (38) durch Beeinflussen der umsortierten quantisierten Spektralwerte auf der Basis eines Schlüssels, um die eindeutig umkehrbare Umsortierung, die bei einem Erzeugen eines verschlüsselten Datenstroms durchgeführt worden ist, rückgängig zu machen, um das entschlüsselte Audiosignal zu erhalten.

## Claims

1. Apparatus (10) for generating an encrypted data stream from an audio signal, comprising:
an encoder (16) for encoding the audio signal in order to generate a data stream with a predefined data stream syntax as output signal;
an encryption means (18) coupled with the encoder (16) for influencing encoder internal data (20a) in a uniquely reversible manner based on a key (k1) such that the generated encrypted data stream comprises payload information differing from payload information of a data stream that would be generated by the apparatus (10) without the presence of the encryption means (18) and that the generated encrypted data stream comprises the predefined data stream syntax,
wherein said encoder is an encoder for audio signals, comprising:
an analysis filter bank (204) for converting the audio signal from the time domain into a spectral representation in order to obtain spectral values;
a quantizing means (206) for quantizing the spectral values under consideration of a psychoacoustic model (208); and
an entropy encoder (210) arranged to carry out an entropy encoding of the quantized spectral values via a plurality of predefined code tables wherein each code table for the entropy encoding of
quantized spectral values is provided in a frequency band and wherein at least one frequency band comprises two or more quantized spectral values, and
wherein said encryption means (18) is arranged to resort the two or more quantized spectral values in the frequency band comprising two or more quantized spectral values having an associated code table based on the key.

2. Apparatus according to claim 1, wherein said encryption means (18) is further arranged to resort the two or more quantized spectral values in such a way that the encrypted data stream has the same length in bits as a data stream that would be generated by the apparatus (10) without the presence of the encryption means.

3. Apparatus according to one of the previous claims, wherein said encryption means (18) is arranged in order to resort the two or more quantized values based on the key merely in such a way that the payload information of the encrypted data stream differ only so strongly from the payload information of a data stream that would be generated without the presence of the encryption means (18), that a decoder that does not possess the key provides a decoded output signal based on the encrypted data with a quality that is lower than the quality that the decoder would provide if it possessed the key, wherein however, a minimum quality is ensured.

4. Apparatus according to claim 1 to 3, wherein the quantizing means (206) is arranged for generating the quantized spectral values as main information and scale factors as side information each of which is associated to at least one quantized spectral value; and
wherein said encryption means (18) is further arranged to influence the scale factors generated by said quantizing means (206) based on the key.

5. Apparatus according to claim 1, wherein said encryption means is arranged to link the quantized spectral values in the frequency band comprising two or more spectral values with a pseudo random bit sequence generated as start value based on the key via an EXCLUSIVE-OR-link.

6. Apparatus according to claim 1, wherein further merely least significant bits of spectral values are linked with a pseudo random bit sequence.

7. Apparatus according to claim 1, wherein said quantized spectral values are signed and wherein said encryption means (18) is further arranged to change the signs of quantized spectral values based on the key.

8. Apparatus according to claim 1, wherein said entropy encoder (210) is arranged such that it comprises at least one code table which is an unsigned code table such that a sign for a code word from the code table is written separately from the code word into the payload information, wherein said encryption means (18) is further arranged to change the sign of at least one quantized spectral value based on the key before said entropy encoding of said quantized spectral values.

9. Apparatus according to claim 1, wherein at least one code table of the plurality of code tables is a multidimensional code table, wherein a code word represents a plurality of quantized spectral values, wherein said encryption means (18) is arranged to resort groups of quantized spectral values, wherein one group of spectral values comprises so many quantized spectral values as encoded by a code word of said multidimensional code table.

10. Apparatus according to one of the previous claims, wherein said encoder comprises a plurality of sub-blocks (204 to 210) connected with a bit stream multiplexer (212) multiplexing data output from the single sub-blocks according to the predefined data stream syntax in order to obtain the output data of said encoder (16).

11. Apparatus (70) for generating a data stream encrypted based on a second key (k2) from a first data stream encrypted based on a first key (k1), wherein said first data stream is an audio signal encoded by using an encoder with a predefined data stream syntax, wherein said first data stream is encrypted such that two or more quantized spectral values in a frequency band comprising two or more quantized spectral values and having an associated code table have been resorted based on the first key, wherein after the resorting an entropy encoding of the quantized spectral values has been carried out via a plurality of predefined code tables, wherein each code table is provided for the entropy encoding of quantized spectral values in a frequency band and wherein at least one frequency band comprises the two or more quantized spectral values, comprising:
a partial decoder (36') for reversing part of the encoding such that the resorted two or more spectral values are present;
a decryption means (38) for decrypting the resorted two or more spectral values by reversing the resorting based on the first key (k1);
an encryption means (18) for influencing the sequence of the two or more spectral values of the frequency band that has an associated code table based on the second key (k2);
a partial encoder (16') for carrying out part of the encoding that has been reversed by the partial decoder (36') in order to generate the data stream encrypted based on the second key (k2), wherein the second data stream has the predefined data stream syntax.

12. Apparatus (70') for generating a second data stream encrypted based on a key (k1) from a first data stream, wherein said first data stream is an audio signal encoded by using an encoder with a predefined data stream syntax, comprising:
a partial decoder (36') for reversing part of the encoding such that quantized spectral values of the audio signal are present;
an encryption means (18) for resorting two or more quantized spectral values in a frequency band comprising two or more spectral values based on the first key (k1), wherein one of a plurality of predefined code tables is associated to the frequency band for the entropy encoding, wherein each code table is provided for an entropy encoding of quantized spectral values in a frequency band and wherein at least one frequency band comprises the two or more quantized spectral values, wherein the encryption means is arranged to resort the quantized spectral values that have the same associated code table;
a partial encoder (16') for carrying out part of the encoding that has been reversed by the partial decoder (36') in order to generate the data stream encrypted based on the key (k1), wherein the second data stream has the predefined data stream syntax.

13. Apparatus (80) for generating a decrypted data stream from a first data stream encrypted based on a key (k1), wherein said first data stream is an audio signal with a predefined data stream syntax encoded by using an encoder, wherein said first data stream is an audio signal with a predefined data syntax encoded by using an encoder wherein the first data stream is encrypted such that at least two or more quantized spectral values in a frequency band have been resorted based on the first key (k1), wherein a plurality of predefined code tables for an entropy encoding is associated with the frequency band whose quantized spectral values have been resorted, wherein each code table for the entropy encoding is provided for the entropy encoding of quantized spectral values in a frequency band and wherein at least one frequency band comprises the two or more quantized spectral values, comprising:
a partial decoder (36') for reversing part of the encoding such that the resorted two or more quantized spectral values are present, wherein the resorted two or more quantized spectral values belong to a frequency band that has an associated code table;
a decryption means (38) for decrypting the resorted two or more quantized spectral values by reversing the resorting based on the key (k1);
a partial encoder (16') for carrying out part of the encoding that has been reversed by the partial decoder (36') in order to generate the second data stream with the predefined data stream syntax.

14. Apparatus according to claims 11 to 13, wherein said partial decoder (36') comprises a bit stream demultiplexer (222), wherein said encoder internal data are the output data from the bit stream demultiplexer (222).

15. Apparatus according to claim 14, wherein said partial decoder (36') further comprises an entropy decoder (224) following the bit stream demultiplexer (222), wherein said encoder internal data are the output data from the entropy decoder (224).

16. Apparatus according to claim 11 to 13, wherein scale factors are influenced apart from the two or more quantized spectral values.

17. Apparatus (30) for generating a decrypted audio signal from an encrypted data stream comprising quantized spectral values of an audio signal being resorted and afterwards entropy encoded within a frequency band in a uniquely reversible manner, wherein the frequency band is defined that it has an associated code table from a plurality of code tables for the entropy encoding wherein the encrypted data stream comprises payload data differing from payload data of a non-encrypted data stream and wherein the encrypted data stream comprises the same data stream syntax as a non-encrypted data stream, comprising:
a decoder (36) for decoding input data in order to generate decoded output data, wherein the decoder comprises an entropy decoder (24) for reversing the entropy encoding in order to obtain the resorted quantized spectral values; and
a decryption means (38) for influencing the resorted quantized spectral values based on a key in order to reverse the uniquely reversible resorting that has been carried out in an apparatus for generating an encrypted data stream in order to obtain the decrypted audio signal.

18. Apparatus (30) according to claim 17, wherein said decoder further comprises:
a plurality of functional blocks coupled with a bit stream demultiplexer (222) conducting parts of the data stream to the single blocks according to the predefined data stream syntax.

19. Apparatus (30) according to claim 18 or 19, wherein said decoder (36) further comprises:
a synthesis filter bank (228) in order to convert a spectral representation of the audio signal into a timely representation.

20. Method (70) for generating an encrypted data stream from an audio signal, comprising:
encoding (16) the audio signal in order to generate a data stream with a predefined data stream syntax as output signal;
encrypting encoder internal data (20a) by influencing (18) the same in a uniquely reversible manner based on a key (k1) such that the generated encrypted data stream comprises payload information differing from payload information of a data stream that would be generated without the step of encrypting and that the generated encrypted data stream comprises the predefined data stream syntax,
wherein in the step of encoding an audio signal is encoded, comprising:
converting (204) the audio signal from the time domain into a spectral representation in order to obtain spectral values;
quantizing (206) the spectral values under consideration of a psychoacoustic model (208); and
entropy encoding (210) of the spectral values via a plurality of predefined code tables wherein each code table for the entropy encoding of quantized spectral values is provided in a frequency band and wherein at least one frequency band comprises two or more quantized spectral values, and
wherein said step of encrypting (18) is carried out to resort the two or more quantized spectral values in the frequency band comprising two or more quantized spectral values having an associated code table based on the key.

21. Method (70) for generating a second data stream encrypted based on a second key (k2) from a first data stream encrypted based on a first key (k1), wherein said first data stream is an audio signal with a predefined data stream syntax encoded by using an encoder, wherein said first data stream is encrypted such that two or more quantized spectral values in a frequency band comprising two or more quantized spectral values and having an associated code table have been resorted based on the first key, wherein after the resorting an entropy encoding of the quantized spectral values has been carried out via a plurality of predefined code tables, wherein each code table is provided for the entropy encoding of quantized spectral values in a frequency band and wherein at least one frequency band comprises the two or more quantized spectral values, comprising:
reversing (36') part of the encoding such that the resorted two or more spectral values are present;
decrypting (38) the resorted two or more spectral values by reversing the resorting based on the first key (k1);
encrypting (18) by influencing the sequence of the two or more spectral values of the frequency band that has an associated code table based on the second key (k2);
carrying out (16') the part of the encoding that has been reversed by the step of reversing (36') in order to generate the data stream encrypted based on the second key (k2), wherein the second data stream has the predefined data stream syntax.

22. Method (70') for generating a second data stream encrypted based on a key (k1) from a first data stream, wherein said first data stream is an audio signal with a predefined data stream syntax encoded by using an encoder, comprising:
reversing (36') part of the encoding such that quantized spectral values of the audio signal are present;
encrypting (18) by resorting two or more quantized spectral values in a frequency band comprising two or more spectral values based on the first key (k1), wherein one of a plurality of predefined code tables is associated to the frequency band for the entropy encoding, wherein each code table is provided for an entropy encoding of quantized spectral values in a frequency band and wherein at least one frequency band comprises the two or more quantized spectral values, wherein the encryption means is arranged to resort the quantized spectral values that have the same associated code table;
carrying out (16') part of the encoding that has been reversed by the partial decoder (36') in order to generate the data stream encrypted based on the key (k1), wherein the second data stream has the predefined data stream syntax.

23. Method (80) for generating a decrypted data stream from a first data stream encrypted based on a key (k1), wherein said first data stream is an audio signal with a predefined data stream syntax encoded by using an encoder, wherein said first data stream is encrypted such that at least two or more quantized spectral values in a frequency band have been resorted based on the first key (k1), wherein a plurality of predefined code tables for an entropy encoding is associated with the frequency band whose quantized spectral values have been resorted, wherein each code table for the entropy encoding of quantized spectral values is provided in a frequency band and wherein at least one frequency band comprises the two or more quantized spectral values, comprising:
reversing (36') part of the encoding such that the resorted two or more quantized spectral values are present, wherein the resorted two or more quantized spectral values belong to the frequency band that has an associated code table;
decrypting (38) the resorted two or more quantized spectral values by reversing the resorting based on the key (k1);
carrying out (16') part of the encoding that has been reversed by the step of reversing (36') in order to generate the second data stream with the predefined data stream syntax.

24. Method (30) for generating a decrypted audio signal from an encrypted data stream comprising quantized spectral values of an audio signal being resorted and afterwards entropy encoded within a frequency band in a uniquely reversible manner, wherein the frequency band is defined by having an associated code table from a plurality of code tables for the entropy encoding wherein the encrypted data stream comprises payload data differing from payload data of a non-encrypted data stream and wherein the encrypted data stream comprises the same data stream syntax as a non-encrypted data stream, comprising:
decoding (36) input data in order to generate decoded output data, wherein in the step of decoding an entropy encoding (24) for reversing the entropy encoding is carried out in order to obtain the resorted quantized spectral values; and
decrypting (38) by influencing the resorted quantized spectral values based on a key in order to reverse the uniquely reversible resorting that has been carried out by generating an encrypted data stream in order to obtain the decrypted audio signal.

## Revendications

1. Dispositif (10) pour générer un flux de données crypté à partir d'un signal audio, aux caractéristiques suivantes
un codeur (16) destiné à coder le signal audio, pour générer, comme signal de sortie, un flux de données avec une syntaxe de flux de données prédéfinie ;
un dispositif de cryptage (18), qui est couplé avec le codeur (16), destiné à influencer les données internes au codeur (20a) de manière réversible univoque sur base d'une clé (k1), de sorte que le flux de données crypté généré présente des informations utiles qui diffèrent des informations utiles d'un flux de données qui serait généré par le dispositif (10) sans la présence du dispositif de cryptage (18), et que le flux de données crypté généré présente la syntaxe de flux de données prédéterminée,
le codeur étant un codeur de signaux audio, présentant les caractéristiques suivantes :
une banque de filtres d'analyse (204) destinée à convertir le signal audio du domaine de temps en une représentation spectrale, pour obtenir des valeurs spectrales ;
un dispositif de quantification (206) destiné à quantifier les valeurs spectrales en tenant compte d'un modèle psycho-acoustique (208) ; et
un codeur entropique (210), qui est disposé de manière à effectuer un codage entropique des valeurs spectrales quantifiées au moyen d'une pluralité de tableaux de codes prédéfinis, chaque tableau de codes étant prévu pour le codage entropique de valeurs spectrales quantifiées dans une bande de fréquences, et au moins une bande de fréquences présentant deux ou plusieurs valeurs spectrales quantifiées, et
le dispositif de cryptage (18) étant disposé de manière à retrier, sur base de la clé, les deux valeurs spectrales quantifiées ou plus dans la bande de fréquence présentant deux valeurs spectrales quantifiées ou plus et à laquelle est associé un tableau de codes.

2. Dispositif selon la revendication 1, dans lequel le dispositif de cryptage (18) est disposé, par ailleurs, de manière à retrier, sur base de la clé, les deux valeurs spectrales quantifiées ou plus de sorte que le flux de données crypté ait la même longueur en bits qu'un flux de données qui serait généré par le dispositif (10) sans la présence du dispositif de cryptage.

3. Dispositif selon l'une des revendications précédentes, dans lequel le dispositif de cryptage (18) est disposé de manière à retrier, sur base de la clef, les deux valeurs spectrales quantifiées ou plus uniquement de sorte que les informations utiles du flux de données crypté ne diffèrent des informations utiles d'un flux de données qui serait généré sans la présence du dispositif de cryptage (18) que dans une mesure telle qu'un décodeur qui n'est pas en possession de la clé fournisse, du fait des données cryptées, un signal de sortie décodé d'une qualité qui est inférieure à la qualité que fournirait le décodeur s'il était en possession de la clé, une qualité minimale étant toutefois assurée.

4. Dispositif selon l'une des revendications 1 à 3, dans lequel le dispositif de quantification (206) est disposé de manière à générer les valeurs spectrales quantifiées comme informations principales et les valeurs d'échelle, chacune desquelles étant associée à au moins une valeur spectrale quantifiée, comme informations latérales ; et
le dispositif de cryptage (18) étant, par ailleurs, disposé de manière à influencer les facteurs d'échelle générés par le dispositif de quantification (206) sur base de la clé.

5. Dispositif selon la revendication 1, dans lequel le dispositif de cryptage est disposé de manière à coupler les valeurs spectrales quantifiées dans la bande de fréquence présentant deux ou plusieurs valeurs spectrales avec une pseudo-suite de bits aléatoires générée, du fait de la clé, comme valeur de départ, au moyen d'un couplage EXCLUSIF-OU.

6. Dispositif selon la revendication 1, dans lequel, par ailleurs, seuls les bits de basse valeur des valeurs spectrales sont couplés avec une pseudo-suite de bits aléatoires.

7. Dispositif selon la revendication 3, dans lequel les valeurs spectrales quantifiées sont pourvues d'un signe et dans lequel le dispositif de cryptage (18) est, par ailleurs, disposé de manière à modifier, sur base de la clé, les signes des valeurs spectrales quantifiées.

8. Dispositif selon la revendication 1, dans lequel le codeur entropique (210) est disposé de sorte qu'il présente au moins un tableau de codes qui est un tableau de codes sans signe, de sorte qu'un signe d'un mot de code du tableau de codes soit écrit séparément du mot de code dans les informations utiles, le dispositif de cryptage (18) étant, par ailleurs, disposé de manière à changer, avant le codage entropique des valeurs spectrales quantifiées, le signe d'une valeur spectrale quantifiée sur base de la clé.

9. Dispositif selon la revendication 1, dans lequel au moins un tableau de codes parmi la pluralité de tableaux de codes est un tableau de codes pluridimensionnel dans lequel un mot de code représente une pluralité de valeurs spectrales quantifiées, le dispositif de cryptage (18) étant disposé de manière à retrier des groupes de valeurs spectrales quantifiées, un groupe de valeurs spectrales présentant autant de valeurs spectrales quantifiées qu'il en est codé par un mot de code du tableau de codes pluridimensionnel.

10. Dispositif selon l'une des revendications précédentes, dans lequel le codeur présente une pluralité de sous-blocs (204 à 210) qui sont reliés à un multiplexeur de train binaire (212) qui multiplexe les données sorties par les différents sous-blocs selon la syntaxe de flux de données prédéfinie, pour obtenir les données de sortie du codeur (16).

11. Dispositif (70) pour générer un deuxième flux de données crypté sur base d'une deuxième clé (k2) à partir d'un premier flux de données crypté sur base d'une première clé (k1), le premier flux de données étant un signal audio codé à l'aide d'un codeur avec une syntaxe de flux de données prédéfinie, le premier flux de données étant crypté de sorte que deux valeurs spectrales quantifiées ou plus dans une bande de fréquences présentant deux valeurs spectrales quantifiées ou plus et à laquelle est associé un tableau de codes soient retriées sur base de la première clé, après le retriage étant effectué un codage entropique des valeurs spectrales quantifiées au moyen d'une pluralité de tableaux de codes prédéfinis, chaque tableau de codes étant prévu pour le codage entropique de valeurs spectrales quantifiées dans une bande de fréquences, et au moins une bande de fréquences présentant les deux ou plusieurs valeurs spectrales quantifiées, aux caractéristiques suivantes :
un décodeur partiel (36') destiné à annuler une partie du codage, de sorte que soient présentes les deux ou plusieurs valeurs spectrales retriées ;
un dispositif de décryptage (38) destiné à décrypter les deux ou plusieurs valeurs spectrales retriées en annulant le retriage sur base de la première clé (k1) ;
un dispositif de cryptage (18) destiné à influencer l'ordre des deux ou plusieurs valeurs spectrales de la bande de fréquences à laquelle est associé un tableau de codes sur base de la deuxième clé (k2) ;
un codeur partie (16') destiné à effectuer la partie du codage qui a été annulée par le décodeur partiel (36'), pour générer le flux de données crypté sur base de la deuxième clé (k2), le deuxième flux de données présentant la syntaxe de flux de données prédéfinie.

12. Dispositif (70') pour générer un deuxième flux de données crypté sur base d'une clé (k1) à partir d'un premier flux de données, le premier flux de données étant un signal audio codé à l'aide d'un codeur avec une syntaxe de flux de données prédéfinie, aux caractéristiques suivantes :
un décodeur partiel (36') destiné à annuler une partie du codage, de sorte que soient présentes des valeurs spectrales quantifiées du signal audio ;
un dispositif de cryptage (18) destiné à retrier deux valeurs spectrales quantifiées ou plus dans une bande de fréquences présentant deux valeurs spectrales quantifiées ou plus, sur base de la première clé (k1), à la bande de fréquences étant associé l'un parmi une pluralité de tableaux de codes prédéfinis pour un codage entropique, chaque tableau de codes étant prévu pour le codage entropique de valeurs spectrales quantifiées dans une bande de fréquences, et au moins une bande de fréquences présentant les deux ou plusieurs valeurs spectrales quantifiées, le dispositif de cryptage étant disposé de manière à retrier les valeurs spectrales quantifiées d'une bande de fréquences auxquelles est associé le même tableau de codes ;
un codeur partiel (16') destiné à effectuer la partie du codage qui a été annulée par le décodeur partiel (36'), pour générer le flux de données crypté sur base de la clé (k1), le deuxième flux de données présentant la syntaxe de flux de données prédéfinie ;

13. Dispositif (80) pour générer un flux de données décrypté à partir d'un premier flux de données crypté sur base d'une première clé (k1), le premier flux de données étant un signal audio codé à l'aide d'un codeur avec une syntaxe de flux de données prédéfinie, le premier flux de données étant crypté de sorte qu'au moins deux valeurs spectrales quantifiées ou plus dans une bande de fréquences soient retriées sur base de la première clé (k1), à la bande de fréquences dont les valeurs spectrales quantifiées ont été retriées étant associé l'un parmi une pluralité de tableaux de codes prédéfinis pour un codage entropique, chaque tableau de codes étant prévu pour le codage entropique de valeurs spectrales quantifiées dans une bande de fréquences, et au moins une bande de fréquences présentant les deux ou plusieurs valeurs spectrales quantifiées, aux caractéristiques suivantes :
un décodeur partiel (36') destiné à annuler une partie du codage de sorte que soient présentes les deux ou plusieurs valeurs spectrales quantifiées retriées, les deux ou plusieurs valeurs spectrales quantifiées retriées appartenant à une bande de fréquences à laquelle est associé un tableau de codes ;
un dispositif de décryptage (38) destiné à décrypter les deux ou plusieurs valeurs spectrales quantifiées retriées en annulant le retriage sur base de la clé (k1) ;
un codeur partiel (16') destiné à effectuer la partie du codage qui a été annulée par le décodeur partiel (36'), pour générer le deuxième flux de données avec la syntaxe de flux de données prédéfinie.

14. Dispositif selon l'une des revendications 11 à 13,
dans lequel le décodeur partiel (36') présente un démultiplexeur de train binaire (222), les données internes au codeur étant les données de sortie du démultiplexeur de train binaire (222).

15. Dispositif selon la revendication 14,
dans lequel le décodeur partiel (36') présente, par ailleurs, un décodeur entropique (224) connecté après le démultiplexeur de train binaire (222), les données internes au codeur étant les données de sortie du décodeur entropique (224).

16. Dispositif selon l'une des revendications 11 à 13, dans lequel, outre les deux ou plusieurs valeurs spectrales quantifiées, les facteurs d'échelle sont également influencés.

17. Dispositif (30) pour générer un signal audio décrypté à partir d'un flux de données crypté présentant des valeurs spectrales d'un signal audio quantifiées et ensuite codées de manière entropique, retriées de manière réversible univoque dans une bande de fréquences, la bande de fréquences étant définie par le fait qu'il lui est associé un tableau de codes parmi une pluralité de tableaux de codes pour le codage entropique, le flux de données crypté présentant des informations utiles qui diffèrent des informations utiles d'un flux de données non crypté et le flux de données crypté présentant la même syntaxe de flux de données qu'un flux de données non crypté, aux caractéristiques suivantes :
un décodeur (36) destiné à décoder des données d'entrée, pour générer des données de sortie décodées, le décodeur présentant un décodeur entropique (24) destiné à annuler le codage entropique, pour obtenir les valeurs spectrales quantifiées retriées ; et
un dispositif de décryptage (38) destiné à influencer les valeurs spectrales quantifiées retriées sur base d'une clé, pour annuler le retriage réversible univoque qui a été effectué dans un dispositif destiné à générer un flux de données crypté, pour obtenir le signal audio décrypté.

18. Dispositif (30) selon la revendication 17, dans lequel le décodeur présente, par ailleurs, les caractéristiques suivantes :
une pluralité de blocs de fonction couplés avec un démultiplexeur de train binaire (222) qui conduit des parties du flux de données selon la syntaxe de flux de données prédéfinie vers les différents blocs.

19. Dispositif (30) selon l'une des revendications 18 ou 19, dans lequel le décodeur (36) présente, par ailleurs, la caractéristique suivante:
une banque de filtres de synthèse (228), destinée à convertir une représentation spectrale du signal audio en une représentation dans le temps.

20. Procédé (10) pour générer un flux de données crypté à partir d'un signal audio, aux étapes suivantes consistant à :
coder (16) le signal audio, pour générer comme signal de sortie un flux de données avec une syntaxe de flux de données prédéfinie ;
crypter les données internes au codeur (20a) en les influençant (18) de manière réversible univoque sur base d'une clé (k1), de sorte que le flux de données crypté généré présente des informations utiles qui diffèrent des informations utiles d'un flux de données qui serait généré sans l'étape de cryptage, et que le flux de données crypté généré présente la syntaxe de flux de données prédéfinie,
à l'étape de codage étant codé un signal audio, aux étapes suivantes consistant à :
convertir (204) le signal audio du domaine du temps en une représentation spectrale, pour obtenir des valeurs spectrales ;
quantifier (206) les valeurs spectrales en tenant compte d'un modèle psycho-acoustique (208) ;
et
effectuer un codage entropique (210) des valeurs spectrales quantifiées au moyen d'une pluralité de tableaux de codes prédéfinis, chaque tableau de codes étant prévu pour le codage entropique des valeurs spectrales quantifiées dans une bande de fréquences, et au moins une bande de fréquences présentant deux ou plusieurs valeurs spectrales quantifiées, et
l'étape de cryptage (18) étant réalisée pour retrier, sur base de la clé, les deux ou plusieurs valeurs spectrales quantifiées dans la bande de fréquences présentant deux ou plusieurs valeurs spectrales quantifiées et à laquelle est associé un tableau de codes.

21. Procédé (70) pour générer un deuxième flux de données crypté sur base d'une deuxième clé (k2) à partir d'un premier flux de données crypté sur base d'une première clé (k1), le premier flux de données étant un signal audio codé à l'aide d'un codeur avec une syntaxe de flux de données prédéfinie, le premier flux de données étant crypté de sorte que deux ou plusieurs valeurs spectrales quantifiées dans une bande de fréquences présentant deux ou plusieurs valeurs spectrales quantifiées et à laquelle est associé un tableau de codes soient retriées sur base de la première clé, après le retriage étant effectué un codage entropique des valeurs spectrales quantifiées au moyen d'une pluralité de tableaux de codes prédéfinis, chaque tableau de codes étant prévu pour le codage entropique de valeurs spectrales quantifiées dans une bande de fréquences, et au moins une bande de fréquences présentant les deux ou plusieurs valeurs spectrales quantifiées, aux étapes suivantes consistant à :
annuler (36') une partie du codage, de sorte que soient présentes les deux ou plusieurs valeurs spectrales retriées ;
décrypter (38) les deux ou plusieurs valeurs spectrales retriées en annulant le retriage sur base de la première clé (k1) ;
crypter (18) en influençant l'ordre des deux ou plusieurs valeurs spectrales de la bande de fréquences à laquelle est associé un tableau de codes, sur base de la deuxième clé (k2) ;
réaliser (16') la partie du codage qui a été annulée par l'étape d'annulation (36'), pour générer le flux de données crypté sur base de la deuxième clé (k2), le deuxième flux de données présentant la syntaxe de flux de données prédéfinie.

22. Procédé (70') pour générer un deuxième flux de données crypté sur base d'une clé (k1) à partir d'un premier flux de données, le premier flux de données étant un signal audio codé à l'aide d'un codeur avec une syntaxe de flux de données prédéfinie, aux étapes suivantes consistant à :
annuler (36') une partie du codage, de sorte que soient présentes des valeurs spectrales quantifiées du signal audio ;
crypter (18) en retriant deux valeurs spectrales quantifiées ou plus dans une bande de fréquences présentant deux valeurs spectrales quantifiées ou plus, sur base de la première clé (k1), à la bande de fréquences étant associé l'un parmi une pluralité de tableaux de codes prédéfinis pour un codage entropique, chaque tableau de codes étant prévu pour le codage entropique de valeurs spectrales quantifiées dans une bande de fréquences, et au moins une bande de fréquences présentant les deux ou plusieurs valeurs spectrales quantifiées, le dispositif de cryptage étant disposé de manière à retrier les valeurs spectrales quantifiées d'une bande de fréquences auxquelles est associé le même tableau de codes ;
réaliser (16') la partie du codage qui a été annulée par le décodeur partiel (36'), pour générer le flux de données crypté sur base de la clé (k1), le deuxième flux de données présentant la syntaxe de flux de données prédéfinie.

23. Procédé (80) pour générer un flux de données décrypté à partir d'un premier flux de données crypté sur base d'une clé (k1), le premier flux de données étant un signal audio codé à l'aide d'un codeur avec une syntaxe de flux de données prédéfinie, le premier flux de données étant crypté de sorte qu'au moins deux ou plusieurs valeurs spectrales quantifiées dans une bande de fréquences soient retriées sur base de la première clé (k1), à la bande de fréquences dont les valeurs spectrales quantifiées ont été retriées étant associé l'un parmi une pluralité de tableaux de codes prédéterminés pour un codage entropique, chaque tableau de codes étant prévu pour le codage entropique de valeurs spectrales quantifiées dans une bande de fréquences, et au moins une bande de fréquences présentant les deux ou plusieurs valeurs spectrales quantifiées, aux étapes suivantes consistant à :
annuler (36') une partie du codage, de sorte que soient présentes les deux ou plusieurs valeurs spectrales quantifiées, les deux ou plusieurs valeurs spectrales quantifiées retriées appartenant à une bande de fréquences à laquelle est associé un tableau de codes ;
décrypter (38) les deux ou plusieurs valeurs spectrales quantifiées retriées en annulant le retriage sur base de la clé (k1) ;
réaliser (16') la partie du codage qui a été annulée par l'étape d'annulation (36'), pour générer le deuxième flux de données avec la syntaxe de flux de données prédéterminées.

24. Procédé (30) pour générer un signal audio décrypté à partir d'un flux de données crypté présentant des valeurs spectrales d'un signal audio quantifiées et ensuite codées de manière entropique, retriées de manière réversible univoque dans une bande de fréquences, la bande de fréquences étant définie par le fait qu'il lui est associé un tableau de codes parmi une pluralité de tableaux de codes pour le codage entropique, le flux de données crypté présentant des informations utiles qui diffèrent des informations utiles d'un flux de données non crypté et le flux de données crypté présentant la même syntaxe de flux de données qu'un flux de données non crypté, aux étapes suivantes consistant à :
décoder (36) des données d'entrée, pour générer des données de sortie décodées, à l'étape de décodage étant effectué un décodage entropique (24) pour annuler le codage entropique, pour obtenir les valeurs spectrales quantifiées retriées ; et
décrypter (38) en influençant les valeurs spectrales quantifiées retriées sur base d'une clé, pour annuler le retriage réversible univoque qui a été effectué lors d'une génération d'un flux de données crypté, pour obtenir le signal audio décrypté.
